# EUROPEAN PATENT APPLICATION

(11) **EP 4 629 652 A2**
(43) Date of publication of application: **08.10.2025**
(21) Application number: 25163582.7
(22) Date of filing: 13.03.2025
(51) Int. Cl.: H04N 23/611, H04N 1/21, G06V 40/16

(54) **INFORMATION PROCESSING SYSTEM, INFORMATION PROCESSING METHOD, PROGRAM, AND STORAGE MEDIUM**

(30) Priority: 01.04.2024 JP 2024059015; 15.01.2025 JP 2025005449
(71) Applicant: CANON KABUSHIKI KAISHA, Tokyo 146-8501 (JP)
(72) Inventor: NORO, Hideo, Tokyo, 146-8501 (JP); OKUDA, Takeru, Tokyo, 146-8501 (JP); KAWAI, Tomoaki, Tokyo, 146-8501 (JP)
(74) Representative: Canon Europe Limited

(57) **Abstract**

In a case where imaging is performed in a state where registrant feature information corresponding to user feature information is not detected, an imaging apparatus performs recording control for recording a captured image obtained by the imaging and the user feature information in association with each other in a memory. If registrant feature information is acquired after that, based on the registrant feature information and the user feature information recorded in the memory, the imaging apparatus determines photographer information that is to be associated with the captured image associated with the user feature information.

## Description

### BACKGROUND

### Technical Field

The present disclosure relates to an information processing system, an information processing method, a program, and a computer-readable data carrier.

### Description of the Related Art

Japanese Patent Application Laid-Open Publication No. 2024-2562 discusses a method for authenticating a user (a photographer) of an imaging apparatus using an eye image captured when the photographer is looking into a viewfinder.

### SUMMARY

However, the technique discussed in Japanese Patent Application Laid-Open Publication No. 2024-2562 has the following issue. If information suitable for identifying (e.g., authenticating) a user of an imaging apparatus is unavailable when imaging is performed, it is not possible to identify the user of the imaging apparatus.

In view of the above issue, the present disclosure is directed to, even if information suitable for identifying a user of an imaging apparatus is unavailable when imaging is performed, enabling the identification of the user of the imaging apparatus.

According to a first aspect of the present invention, there is provided an information processing system as specified in claims 1 to 20. According to a second aspect of the present invention, there is provided an information processing method as specified in claim 21. According to a third aspect of the present invention, there is provided a program as specified in claim 22. According to a fourth aspect of the present invention, there is provided a computer-readable data carrier having stored thereon the computer program specified in claim 22.

Further features of the present invention will become apparent from the following description of embodiments with reference to the attached drawings.

### BRIEF DESCRIPTION OF THE DRAWINGS

Figs. 1A and 1B are diagrams illustrating an external configuration of an imaging apparatus.
Fig. 2 is a diagram illustrating a hardware configuration of the imaging apparatus.
Fig. 3 is a diagram illustrating a first example of a functional configuration of the imaging apparatus.
Fig. 4 is a flowchart illustrating a first example of an operation of the imaging apparatus.
Fig. 5 is a diagram illustrating a configuration of a first information acquisition section.
Fig. 6 is a diagram illustrating a second example of the functional configuration of the imaging apparatus.
Fig. 7 is a flowchart illustrating a second example of the operation of the imaging apparatus.
Figs. 8A and 8B are diagrams illustrating a first example of information displayed on a display panel of the imaging apparatus.
Fig. 9 is a flowchart illustrating a first example of an operation of a holding section.
Fig. 10 is a diagram illustrating a configuration of the holding section.
Fig. 11 is a flowchart illustrating a second example of the operation of the holding section.
Figs. 12A and 12B are diagrams illustrating a second example of the information displayed on the display panel of the imaging apparatus.
Fig. 13 is a diagram illustrating a configuration of an information processing system.
Fig. 14 is a diagram illustrating a hardware configuration of a server.
Fig. 15 is a diagram illustrating a third example of the functional configuration of the imaging apparatus.
Fig. 16 is a diagram illustrating a functional configuration of the server.
Fig. 17 is a flowchart illustrating an operation of the server.
Fig. 18 is a flowchart illustrating an operation of the information processing system.
Figs. 19A and 19B are diagrams illustrating a second example of the external configuration of the imaging apparatus.
Fig. 20 is a diagram illustrating a third example of the functional configuration of the imaging apparatus.
Figs. 21A and 21B are diagrams illustrating a third example of the information displayed on the display panel of the imaging apparatus.
Fig. 22 is a flowchart illustrating a third example of the operation of the imaging apparatus.
Fig. 23 is a diagram illustrating a fourth example of the functional configuration of the imaging apparatus.
Fig. 24 is a flowchart illustrating a fourth example of the operation of the imaging apparatus.
Figs. 25A and 25B are diagrams illustrating a fourth example of the information displayed on the display panel of the imaging apparatus.

### DESCRIPTION OF THE EMBODIMENTS

With reference to the drawings, embodiments of the present disclosure will be described below. The present disclosure is not limited to the following embodiments, and is applicable to any form that matches the spirit of the present disclosure.

First, a first embodiment is described. In the present embodiment, a case is illustrated where an information processing system is included in an imaging apparatus. The information processing system may not be included in the imaging apparatus.

For example, the present embodiment may be achieved by using an information processing apparatus connected to the imaging apparatus so that the information processing apparatus can communicate with the imaging apparatus.

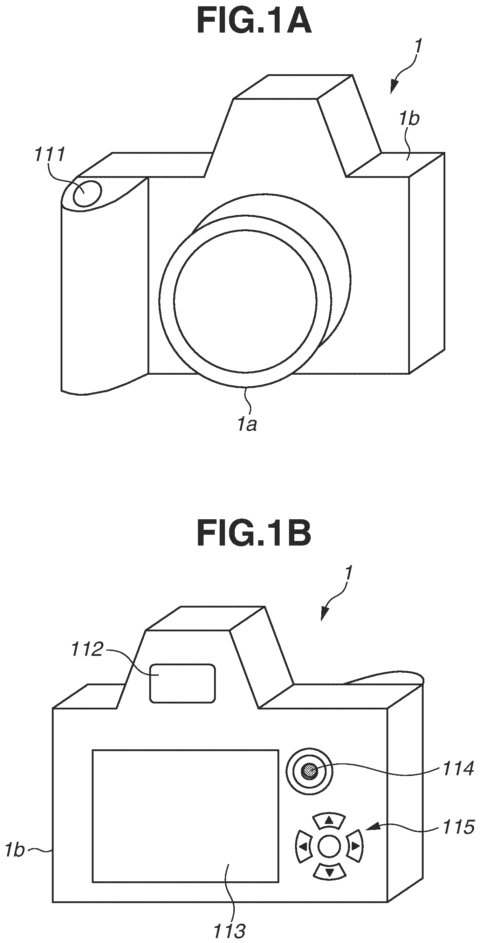

Figs. 1A and 1B are diagrams illustrating an example of the external configuration of the imaging apparatus. Fig. 1A is an example of a perspective view of the front side of an imaging apparatus 1. Fig. 1B is an example of a perspective view of the back side of the imaging apparatus 1.

As illustrated in Fig. 1A, in the present embodiment, a case is illustrated where the imaging apparatus 1 includes an imaging lens unit 1a and a camera housing 1b. In the camera housing 1b, a shutter release button 111 as an operation member that receives an imaging operation from a user (a user of the imaging apparatus 1) is placed. In the following description, the (actual) user of the imaging apparatus 1 is referred to as a "photographer", where necessary. As illustrated in Fig. 1B, on the back surface of the camera housing 1b, a viewfinder 112 into which the photographer looks to view a display device 216 (a display panel) placed in the camera housing 1b is placed. On the back surface of the camera housing 1b, operation members 113 to 115 that receive various operations from the user are also placed. For example, the operation member 113 includes a touch panel that receives a touch operation. The operation member 114 includes an operation lever that can be pushed down in directions. The operation member 115 includes a four-direction key that can be pushed in in each of four directions. The operation member 113 (the touch panel) includes a display panel (e.g., a liquid crystal display panel) and has the function of displaying an image on the display panel.

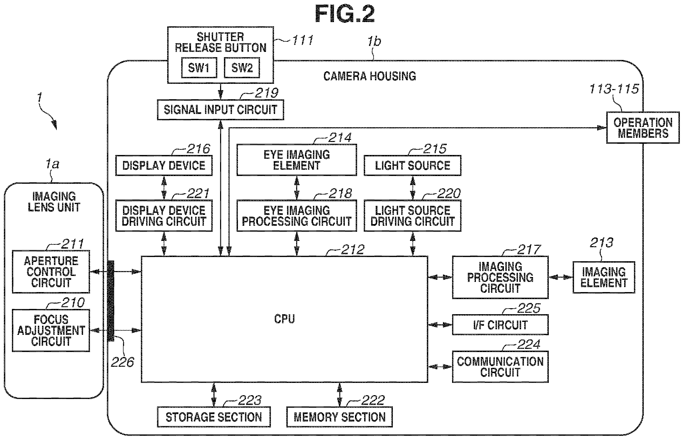

Fig. 2 is a diagram illustrating an example of the hardware configuration of the imaging apparatus 1.

Fig. 2 illustrates a case where the imaging lens unit 1a includes a focus adjustment circuit 210 and an aperture control circuit 211.

The focus adjustment circuit 210 changes the focusing position by moving an imaging lens (not illustrated) included in the imaging lens unit 1a. The aperture control circuit 211 changes the stop value by causing a diaphragm (not illustrated) included in the imaging lens unit 1a to operate. In the present embodiment, a case is illustrated where the focus adjustment circuit 210 and the aperture control circuit 211 operate based on signals input from a central processing unit (CPU) 212 included in the camera housing 1b via a mount contact 226.

As described above, in the present embodiment, a case is illustrated where the camera housing 1b includes the shutter release button 111, the viewfinder 112, and the operation members 113 to 115. In Fig. 2, in the present embodiment, a case is illustrated where the camera housing 1b includes the CPU 212, an imaging element 213, an eye imaging element 214, a light source 215, a display device 216, and an imaging processing circuit 217. In the present embodiment, a case is illustrated where the camera housing 1b includes an eye imaging processing circuit 218, a signal input circuit 219, a light source driving circuit 220, a display device driving circuit 221, a memory section 222, a storage section 223, a communication circuit 224, and an interface (I/F) circuit 225.

The CPU 212 is an example of a processor that performs overall control of the entirety of the imaging apparatus 1.

The storage section 223 stores various computer programs and various pieces of data as information required when the CPU 212 performs processing. The memory section 222 temporarily stores a computer program and data to be processed by the CPU 212.

A case is illustrated where in the imaging apparatus 1 according to the present embodiment, a single CPU 212 executes processes illustrated in flowcharts described below, using a single memory (the memory section 222). The present disclosure, however, is not necessarily limited to this. For example, the processes illustrated in the flowcharts described below may be executed by the cooperation of a plurality of CPUs, storage sections, and memory sections. At least parts of the processes illustrated in the flowcharts may be executed by dedicated hardware. Examples of the dedicated hardware include an application-specific integrated circuit (ASIC) and a field-programmable gate array (FPGA). The processor is not limited to a CPU. For example, the processor may be a graphics processing unit (GPU).

To the signal input circuit 219, the shutter release button 111 is connected. Fig. 2 illustrates a case where the shutter release button 111 includes a switch SW1 and a switch SW2. The switch SW1 is a switch that is turned on by a first stroke on the shutter release button 111 and starts an imaging preparation operation (e.g., photometry and distance measurement) of the imaging apparatus 1. The switch SW2 is a switch that is turned on by a second stroke on the shutter release button 111 and starts an imaging operation. On signals from the switches SW1 and SW2 are input to the signal input circuit 219 and transmitted to the CPU 212.

Further, to the CPU 212, the operation members 113 to 115 are also connected. If the photographer operates the operation members 113 to 115, the operation members 113 to 115 output operation signals according to the operations of the photographer to the CPU 212. The CPU 212 performs processing (control) according to the operation signals.

The display device 216 displays a variety of pieces of information on a screen (a display surface) of the display device 216. For example, the display device 216 is a liquid crystal display panel and displays a captured image (an object image) on the screen. The display device driving circuit 221 drives the display device 216. The photographer can view the screen of the display device 216 through the viewfinder 112.

The imaging element 213 is placed on a planned image forming plane of the imaging lens unit 1a. The imaging processing circuit 217 outputs to the CPU 212 a signal of a captured image obtained by performing a process including analog-to-digital (A/D) conversion on a signal from the imaging element 213 (a plurality of pixels).

The light source 215 is a light source for illuminating the eyeball of the photographer looking into the viewfinder 112.

Fig. 2 illustrates a case where the light source 215 is driven by the light source driving circuit 220. An optical image of the eyeball illuminated by the light source 215 passes through an eyepiece lens (not illustrated) included in the camera housing 1b, is reflected by a light divider (not illustrated) included in the camera housing 1b, and then is formed on the eye imaging element 214 by a light-receiving lens (not illustrated) included in the camera housing 1b.

The eye imaging processing circuit 218 outputs to the CPU 212 a signal of an eye image obtained by performing a process including A/D conversion on a signal from the eye imaging element 214. The eye image is a captured image (mainly) including the eyeball.

The communication circuit 224 is a circuit that performs various processes for communicating with the outside of the imaging apparatus 1. The communication circuit 224 may perform wireless communication with the outside of the imaging apparatus 1, or may perform wired communication with the outside of the imaging apparatus 1, or may perform communication with the outside of the imaging apparatus 1 via a network.

The I/F circuit 225 is a circuit that performs various processes for exchanging data with an apparatus connected to the I/F circuit 225. To the I/F circuit 225, for example, a storage medium is connected.

The hardware of the imaging apparatus 1 is not limited to the configurations illustrated in Figs. 1A, 1B, and 2. The hardware itself of the imaging apparatus 1 may be achieved by a known technique. For example, the present embodiment may be achieved by using the hardware of a known imaging apparatus such as a mirrorless camera or a compact digital camera.

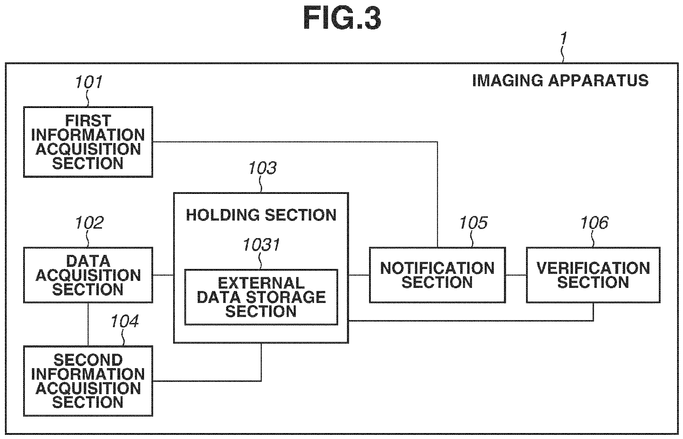

Fig. 3 is a diagram illustrating an example of the functional configuration of (an information processing system included in) the imaging apparatus 1.

Fig. 3 illustrates a case where the imaging apparatus 1 includes a first information acquisition section 101, a data acquisition section 102, a holding section 103, a second information acquisition section 104, a notification section 105, and a verification section 106.

The first information acquisition section 101 acquires information regarding the feature of a registrant registered as a legitimate user of the imaging apparatus 1. For example, the first information acquisition section 101 identifies a user (a photographer) of the imaging apparatus 1 as a registrant and then acquires information regarding the feature of the registrant. In the following description, the information regarding the feature of the registrant is referred to as "registrant feature information", where necessary.

The photographer is authenticated by verifying the registrant feature information and information regarding the feature of the photographer acquired at the timing when imaging is performed, against each other. In the following description, the information regarding the feature of the photographer acquired at the timing when imaging is performed is referred to as "user feature information", where necessary.

The registrant feature information and the user feature information are information for the verification section 106 to authenticate the photographer. For example, the user feature information is information indicating a feature that can be acquired (calculated) from a living body. The registrant feature information is information to be verified against the user feature information.

If the user feature information is the same as or similar to the registrant feature information, the imaging apparatus 1 determines that the photographer is the registrant. Thus, for example, it is desirable that the registrant feature information and the user feature information be information indicating features that can be acquired (calculated) from information regarding the same part of living bodies.

The data acquisition section 102 acquires an image (a captured image) captured by the imaging apparatus 1 based on an imaging instruction from a photographer and holds (stores) the captured image in the holding section 103. At this time, the captured image may be stored outside the imaging apparatus 1 by an external data storage section 1031.

For example, the external data storage section 1031 may store the captured image in a storage medium attachable to and detachable from the imaging apparatus 1. As an example of the storage medium, a Secure Digital (SD) memory card or a CompactFlash (CF (registered trademark)) card is illustrated. The external data storage section 1031 may store the captured image in a storage medium connected to the imaging apparatus 1 in a wired or wireless manner. As an example of the storage medium, a Universal Serial Bus (USB) memory is illustrated. The external data storage section 1031 may store the captured image in storage on a cloud.

The second information acquisition section 104 acquires user feature information. For example, when an image is captured by the data acquisition section 102 or almost simultaneously with when an image is captured by the data acquisition section 102, the second information acquisition section 104 acquires user feature information. The holding section 103 stores user feature information in association (linking) with a captured image corresponding to the user feature information. For example, the holding section 103 stores user feature information in association with a captured image acquired simultaneously or almost simultaneously with the user feature information in the holding section 103. In the present embodiment, for example, an example of a recording control unit is achieved by using the holding section 103.

For example, this association may be performed by managing the hash values of the user feature information and the captured image together. A hash value is a value having a fixed length calculated for data having an unfixed length and is designed to be a different value if the original data differs. In principle, a plurality of pieces of data can have the same hash value (the hash values of the plurality of pieces of data can collide with each other). However, in practice, hash collisions can be considered highly unlikely. It is difficult to generate data of which the hash value is a particular value. Thus, it can be considered that it is impossible to replace the captured image associated with the user feature information with another image. The hash values can be calculated by using a known technique (e.g., the technique of Secure Hash Algorithm 256 (SHA-256)). Thus, the hash values are not described in detail.

If registrant feature information is acquired by the first information acquisition section 101 and user feature information is stored in association with a captured image in the holding section 103, the notification section 105 notifies the verification section 106 that the registrant feature information and the user feature information can be verified against each other.

The verification section 106 verifies registrant feature information and user feature information against each other, thereby determining whether an actual user (a photographer) of the imaging apparatus 1 and a registrant registered as a user of the imaging apparatus 1 are the same person. For example, the verification section 106 determines whether a person identified from the registrant feature information and a person identified from the user feature information coincide with each other. As a result of this determination, if the identified people are the same person, the authentication of the photographer is successful. In this case, the verification section 106 performs a predetermined operation.

Examples of the predetermined operation include the assignment of information regarding the photographer to a captured image so that the information cannot be falsified. In this manner, it is possible to guarantee who has captured the captured image (guarantee authenticity). In the following description, the information that guarantees who has captured the captured image (guarantees authenticity) is referred to as "photographer information", where necessary. To assign the photographer information to the captured image so that the photographer information cannot be falsified, for example, an electronic signature technique may be used. The electronic signature technique is a technique capable of proving that data is not falsified from the time when an electronic signature is assigned, and can be achieved by a known technique. Thus, the electronic signature is not described in detail. The photographer information may only need to be associated with the captured image, and may not need to be assigned to the captured image.

This is an example of the flow of the general operation of (the information processing system included in) the imaging apparatus 1 according to the present embodiment. The summary of an example of the flow of the authentication of a photographer is as follows.

The first information acquisition section 101 acquires registrant feature information that is information regarding the feature of a registrant.

The data acquisition section 102 performs imaging based on an imaging instruction from a photographer. According to the imaging instruction from the photographer (e.g., when the imaging instruction is issued or almost simultaneously with when the imaging instruction is issued), the second information acquisition section 104 acquires user feature information regarding the feature of the photographer. The holding section 103 stores the user feature information and a captured image in association with each other.

The notification section 105 verifies that the registrant feature information and the user feature information are both available. If this verification is made, the verification section 106 verifies the registrant feature information and the user feature information against each other, thereby authenticating the photographer.

When user feature information is acquired by the second information acquisition section 104, there is a case where registrant feature information corresponding to the user feature information has not yet been acquired by the first information acquisition section 101.

Examples of the case where the registrant feature information has not yet been acquired also include a case where the first information acquisition section 101 fails to acquire the registrant feature information. In the present embodiment, even in such a case, a photographer is enabled to be authenticated.

In the present embodiment, a case is illustrated where, if registrant feature information has not yet been acquired when user feature information is acquired, the holding section 103 continues to store the user feature information in association with a captured image until registrant feature information is acquired. In the present embodiment, a case is illustrated where at the time when (or after) user feature information and registrant feature information are available, the verification section 106 verifies the user feature information and the registrant feature information against each other and authenticates a photographer. In this manner, even if the authentication of a photographer fails (or cannot be performed) because registrant feature information has not yet been acquired, the verification section 106 can authenticate the photographer later.

If registrant feature information is already acquired, photographer information is assigned to a captured image, for example, every time imaging is performed. On the other hand, if registrant feature information has not yet been acquired when user feature information is acquired, photographer information is not assigned to a captured image when imaging is performed. In this case, photographer information is collectively assigned to captured images after registrant feature information is acquired.

A specific example of the processing of (the information processing system included in) the imaging apparatus 1 is described below. For ease of description, the following description is issued taking as an example a case where "a photographer of a captured image is a person A", where necessary.

First, a description is issued of an example of the processing of the imaging apparatus 1 when registrant feature information is acquired.

The first information acquisition section 101 identifies a user of the imaging apparatus 1 as "a person A" or limits the user of the imaging apparatus 1 to "several people including the person A", and then acquires authentication information (registrant feature information) regarding the user. For example, a photographer looks into the viewfinder 112 of the imaging apparatus 1. For example, the first information acquisition section 101 acquires an eye image obtained by the eye imaging element 214, the light source 215, and the eye imaging processing circuit 218 and acquires registrant feature information based on the eye image.

As described above, in the present embodiment, a case is illustrated where the registrant feature information is used by the verification section 106 together with user feature information acquired by the second information acquisition section 104.

The method for acquiring the registrant feature information is not limited to the above method. For example, information regarding the features of the people including the photographer (the person A) may be registered in advance as the registrant feature information in the imaging apparatus 1. For example, the first information acquisition section 101 may acquire the registrant feature information by reading information stored in a storage medium (e.g., an identification (ID) card) as the information regarding the features of the people including the photographer (the person A).

The registrant feature information needs to be information (a value) that enables the verification section 106 to verify against the user feature information. For example, the registrant feature information is acquired in advance by a method the same as or similar to that for the user feature information. An example of the method for acquiring the user feature information will be described in detail in the following description of the time when imaging is performed.

Next, a description is issued of an example of the processing of the imaging apparatus 1 when imaging is performed.

For example, a photographer issues an imaging instruction while looking into the viewfinder 112 of the imaging apparatus 1.

In the present embodiment, a case is illustrated where imaging is performed by the data acquisition section 102, and a captured image is stored as an image file in the holding section 103. The captured image may be stored inside the imaging apparatus 1, or may be stored outside the imaging apparatus 1.

It is considered that most captured images are captured by a registrant identified based on registrant feature information acquired by the first information acquisition section 101. However, this is not necessarily true. For example, if another person temporarily performs imaging on behalf of the registrant at an imaging site, a captured image is not captured by the registrant.

To correctly determine that a captured image is captured by the person A, it is desirable that the imaging apparatus 1 acquire information (user feature information) regarding the feature of the photographer at the moment of imaging, and based on this information, determine that the photographer is the person A.

Accordingly, for example, when imaging is performed or almost simultaneously with when imaging is performed, the second information acquisition section 104 acquires an eye image obtained by the eye imaging element 214, the light source 215, and the eye imaging processing circuit 218, and acquires user feature information based on the eye image. The user feature information is information that allows the identification of an individual person, and is also termed a feature amount or a feature vector. The feature amount has the property that the similarity between feature amounts calculated based on any eye images of a plurality of eye images of the same person is high. The feature amount has the property that the similarity between a feature amount calculated based on an eye image of a certain person and a feature amount calculated based on an eye image of another person different from the certain person is low. The calculation itself of the feature amount (the user feature information) can be achieved by, for example, using a known technique in the field of object recognition, face recognition, or iris authentication. Thus, the details of the method for calculating the feature amount (the user feature information) are omitted.

The user feature information acquired by the second information acquisition section 104 is stored in association with a captured image captured simultaneously or almost simultaneously with the user feature information in the holding section 103. Although a case is illustrated where the user feature information is stored in the holding section 103, the present disclosure is not necessarily limited to this. For example, an eye image that allows the calculation of the user feature information may be stored in the holding section 103. The user feature information may be information calculated based on information other than that regarding an eye image (e.g., biological information). For example, at least one of information regarding the feature of (the entirety of) the face of a person and information regarding the feature of the fingerprint of the person may be included in the user feature information instead of or in addition to the information regarding the feature based on the eye image.

Such user feature information (information regarding the feature of the photographer) or information that allows the calculation of the user feature information may be stored in the holding section 103.

The notification section 105 determines whether both conditions are satisfied: that registrant feature information has been acquired and that user feature information associated with a captured image is present. As a result of this determination, if registrant feature information is acquired by the first information acquisition section 101 and user feature information associated with a captured image is present, the notification section 105 determines that the verification section 106 needs to perform verification and authentication. On the other hand, in at least one of a case where registrant feature information is not acquired by the first information acquisition section 101 and a case where user feature information associated with a captured image is not present, the notification section 105 determines that the verification section 106 cannot perform verification and authentication.

As described above, for example, registrant feature information is acquired by the first information acquisition section 101. For example, user feature information is calculated by the second information acquisition section 104 based on an eye image when imaging is performed. If the calculation of user feature information is successful, the user feature information is stored in association with a captured image in the holding section 103. However, for example, if the eye of the photographer is not in proximity to the viewfinder 112 when imaging is performed, or if the eye is in proximity to the viewfinder 112, but the photographer happens to close the eye when an eye image is captured, there is a case where the acquisition of user feature information fails. In this case, user feature information associated with a captured image is absent.

Registrant feature information is information that is stored in a form in which the imaging apparatus 1 can refer to the information. On the other hand, user feature information is information that, every time a captured image is obtained, is stored in association with the captured image. Every time user feature information is obtained, the notification section 105 determines whether the verification section 106 needs to perform verification and authentication. Then, the notification section 105 notifies the verification section 106 of the result of the determination. If user feature information associated with a captured image and registrant feature information are already verified against each other by the verification section 106, it is not necessary to reverify the user feature information and the registrant feature information against each other. Examples of the details of the operation of the notification section 105 will be described below.

If the notification section 105 determines that the verification section 106 needs to perform verification and authentication, then with respect to each piece of user feature information, the verification section 106 compares (verifies) the registrant feature information and the user feature information. Based on the result of this comparison, the verification section 106 determines whether the authentication of the photographer is successful. For example, if the similarity between the registrant feature information and the user feature information is greater than or equal to a predetermined value, the verification section 106 may determine that the authentication of the photographer is successful. If not, the verification section 106 may determine that the authentication fails.

If a plurality of pieces of registrant feature information is present, for example, the verification section 106 may determine whether the similarity between a piece of registrant feature information having the highest similarity to the user feature information among the plurality of pieces of registrant feature information, and the user feature information is greater than or equal to the predetermined value.

If the authentication of the photographer is successful, the verification section 106 performs a predetermined operation. Examples of the predetermined operation include the addition of photographer information to a captured image associated with the user feature information so that the photographer information cannot be falsified. For example, the photographer information includes identification information regarding (the name and the ID of) a person on which the registrant feature information is based. If the person is the person A, it can be said that "this captured image is a captured image captured by the person A". The verification section 106 adds such photographer information to a captured image so that the photographer information cannot be falsified, whereby it is possible to guarantee the authenticity of the photographer for the captured image.

These are examples of the functions included in the components of the imaging apparatus 1 in a case where registrant feature information is acquired by the first information acquisition section 101 in advance of imaging.

However, there is a case where registrant feature information is not acquired by the first information acquisition section 101 when imaging is performed. For example, this is a case where a photo opportunity arises before registrant feature information is acquired by the first information acquisition section 101. In such a case, photographer information cannot be assigned to a captured image when imaging is performed. Accordingly, in the present embodiment, a case is illustrated where in such a case, registrant feature information is acquired after imaging is performed.

In the present embodiment, a case is illustrated where, if registrant feature information is not acquired by the first information acquisition section 101 when imaging is performed, the notification section 105 does not instruct the verification section 106 to perform verification and authentication. In the present embodiment, a case is illustrated where, if registrant feature information is acquired by the first information acquisition section 101 after imaging is performed, the notification section 105 instructs the verification section 106 to verify and authenticate each of pieces of user feature information that are stored in the holding section 103 and have not yet been verified. In this case, as described above, the verification section 106 having received the instruction verifies and authenticates each of the pieces of user feature information that are stored in the holding section 103 and have not yet been verified.

The notification section 105 may not determine whether it is necessary to perform verification and authentication, and the notification section 105 may not issue an instruction to perform verification and authentication. In this case, regardless of the presence or absence of registrant feature information and user feature information, the verification section 106 may verify the registrant feature information and the user feature information against each other. If at least one of the registrant feature information and the user feature information is absent, the verification section 106 determines that the authentication of a photographer fails.

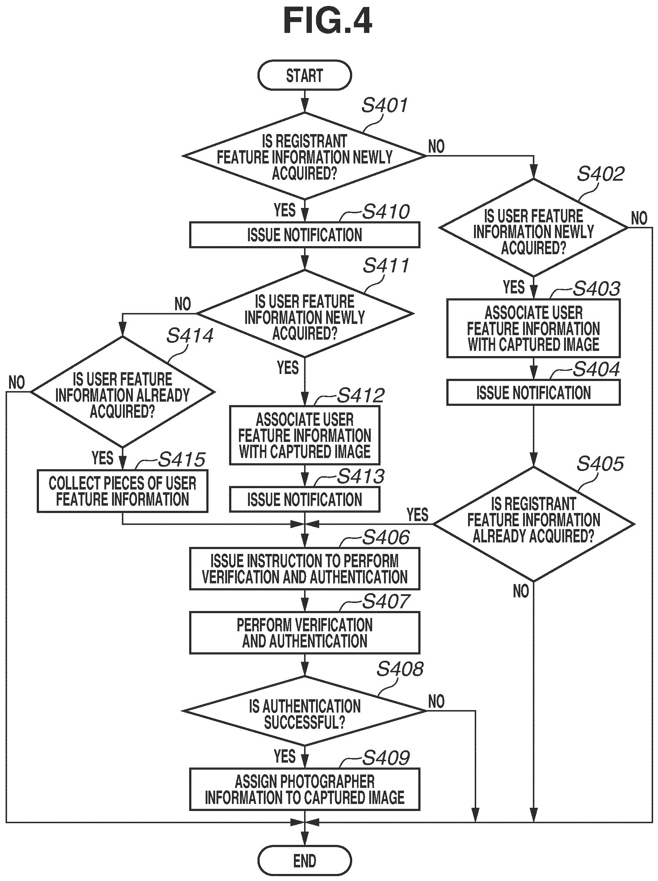

Fig. 4 is a flowchart illustrating an example of the operation of the imaging apparatus 1 according to the present embodiment. For example, the flowchart in Fig. 4 is repeatedly executed in a predetermined cycle. For example, the flowchart in Fig. 4 may start if a predetermined operation (e.g., an operation for imaging or an operation for acquiring registrant feature information) on the imaging apparatus 1 is performed.

In step S401, the first information acquisition section 101 determines whether registrant feature information is newly acquired. For example, if the imaging apparatus 1 acquires registrant feature information immediately after the imaging apparatus 1 is powered on from an off state, the determination of the first information acquisition section 101 may be YES in step S401. For example, if a predetermined time elapses after the imaging apparatus 1 acquires registrant feature information, or if the imaging apparatus 1 acquires registrant feature information after the user issues a log-off instruction, the determination of the first information acquisition section 101 may be YES in step S401.

As a result of this determination, if registrant feature information is not newly acquired (NO in step S401), the operation in step S402 is performed. In step S402, the second information acquisition section 104 determines whether user feature information is newly acquired when imaging is performed. For example, if the imaging apparatus 1 acquires user feature information immediately after the imaging apparatus 1 is powered on from the off state, the determination of the second information acquisition section 104 may be YES in step S402. For example, if a predetermined time elapses after the imaging apparatus 1 acquires user feature information, or if the imaging apparatus 1 acquires user feature information after the user issues a log-off instruction, the determination of the second information acquisition section 104 may be YES in step S402. Every time imaging is performed, the imaging apparatus 1 attempts to acquire user feature information. If the user feature information is acquired, the determination may be YES in step S402.

As a result of this determination, if user feature information is not newly acquired (NO in step S402), registrant feature information and user feature information are not newly acquired. In this case, the processing of the flowchart in Fig. 4 ends.

If, on the other hand, user feature information is newly acquired (YES in step S402), the operation in step S403 is performed. In step S403, the holding section 103 stores the user feature information in association with a captured image. In this case, the captured image is obtained simultaneously (or almost simultaneously) with the acquisition of the user feature information.

Next, in step S404, the second information acquisition section 104 notifies the notification section 105 that the user feature information is acquired and associated with the captured image. The operation in step S404 (the notification) may be performed by the holding section 103.

Next, in step S405, the notification section 105 determines whether registrant feature information is already acquired. A case where registrant feature information is already acquired is a case where it is determined that registrant feature information is newly acquired in the operation in step S401 in the flowchart in Fig. 4 that has already been performed.

For example, this determination can be made based on the presence or absence of a notification in step S410 in the flowchart in Fig. 4 that has already been issued. As a result of this determination, if registrant feature information is not already acquired (NO in step S405), the user feature information is acquired, but registrant feature information is not acquired when the imaging is performed. In this case, the processing of the flowchart in Fig. 4 ends.

If, on the other hand, registrant feature information is already acquired (YES in step S405), the registrant feature information and the user feature information are present (the imaging is performed in the state where the registrant feature information is acquired before the imaging is performed). In this case, the operation in step S406 is performed. In step S406, the notification section 105 instructs the verification section 106 to perform verification and authentication. In step S407, the verification section 106 compares the registrant feature information and the user feature information, thereby verifying the registrant feature information and the user feature information against each other.

Next, in step S408, based on the result of the comparison in step S407, the verification section 106 determines whether the authentication of a photographer is successful. For example, this determination is made by determining whether a person identified from the user feature information and a person identified from the registrant feature information are the same person. As a result of this determination, if the authentication is successful (YES in step S408), the operation in step S409 is performed. In step S409, the verification section 106 assigns photographer information regarding the successfully authenticated user to the captured image associated with the user feature information used for the verification when it is determined that the authentication is successful, so that the photographer information cannot be falsified. The processing of the flowchart in Fig. 4 ends. On the other hand, as a result of the determination in step S408, if the authentication fails (NO in step S408), the processing of the flowchart in Fig. 4 ends.

As a result of the determination in step S401, if registrant feature information is newly acquired (YES in step S401), the operation in step S410 is performed. In step S410, the first information acquisition section 101 notifies the notification section 105 that the registrant feature information is acquired.

Next, in step S411, the second information acquisition section 104 determines whether user feature information is newly acquired. As a result of this determination, if user feature information is newly acquired (YES in step S411), the operation in step S412 is performed. As described in the operation in step S402, a case is illustrated where a captured image is obtained simultaneously (or almost simultaneously) with the acquisition of the user feature information. In step S412, the holding section 103 stores the user feature information in association with the captured image.

Next, in step S413, the second information acquisition section 104 notifies the notification section 105 that the user feature information is acquired and associated with the captured image. The operation in step S413 (the notification) may be performed by the holding section 103. If the operation in step S413 is performed, the registrant feature information and the user feature information are present (the registrant feature information and the user feature information are acquired when the imaging is performed). In this case, the processes of steps S406 and S407 are performed.

As a result of the determination in step S411, if user feature information is not acquired (NO in step S411), the operation in step S414 is performed. In step S414, the notification section 105 determines whether user feature information is already acquired. A case where user feature information is already acquired is a case where it is determined that user feature information is newly acquired in the operation in step S402 or S411 in the flowchart in Fig. 4 that has already been performed. For example, this determination is made based on the presence or absence of a notification in step S404 in the flowchart in Fig. 4 that has already been issued. As a result of this determination, if user feature information is not already acquired (NO in step S411), user feature information is not acquired. In this case, the processing of the flowchart in Fig. 4 ends.

If, on the other hand, user feature information is already acquired (YES in step S414), the registrant feature information and the user feature information are present (the user feature information is acquired when the imaging is performed, and the registrant feature information is acquired before the imaging is performed). In this case, the operation in step S415 is performed. In step S415, the notification section 105 collects pieces of user feature information regarding each of which a notification is issued that the user feature information is associated with the captured image in step S404 in the flowchart in Fig. 4 that has already been performed. The pieces of user feature information collected in step S415 may not include user feature information already used for the verification process by the verification section 106. The processes of steps S406 and S407 are performed. In this case, in step S406, the notification section 105 instructs the verification section 106 to individually verify all the pieces of user feature information collected in step S415 against the registrant feature information.

As described above, in the present embodiment, (the information processing system included in) the imaging apparatus 1 acquires registrant feature information as an example of a first feature of a person. The imaging apparatus 1 acquires user feature information as an example of a second feature of a person. The imaging apparatus 1 identifies a photographer by performing a verification process for verifying the registrant feature information and the user feature information against each other. If imaging is performed in the state where registrant feature information corresponding to the user feature information is not detected, the imaging apparatus 1 performs recording control for recording a captured image obtained by the imaging and the user feature information in association with each other in a memory. The memory that records the captured image and the user feature information in association with each other may be the same storage medium or may be different storage media. Then, if registrant feature information is acquired, then based on the registrant feature information and the user feature information recorded in the memory, the imaging apparatus 1 determines photographer information that is to be associated with the captured image associated with the user feature information.

Thus, even if information for identifying a photographer is unavailable when imaging is performed, information regarding the photographer (photographer information) can be identified after the imaging is performed. Thus, for example, even if registrant feature information is registered after the imaging is performed, it is possible to guarantee the authenticity of the photographer for a captured image.

Next, a second embodiment is described. In the present embodiment, a case is described where a photographer (e.g., a person who looks into the viewfinder 112) is authenticated, and then, registrant feature information is acquired. In this manner, it is possible to prevent a third person from being determined as a registrant. It is possible to spend sufficient time on the authentication at this time, and therefore, it is possible to perform accurate authentication. As described above, the present embodiment is mainly different from the first embodiment in a configuration and processing for acquiring registrant feature information. Thus, in the description of the present embodiment, portions similar to those in the first embodiment are designated by the same signs as the signs in Figs. 1 to 4, and are not described in detail.

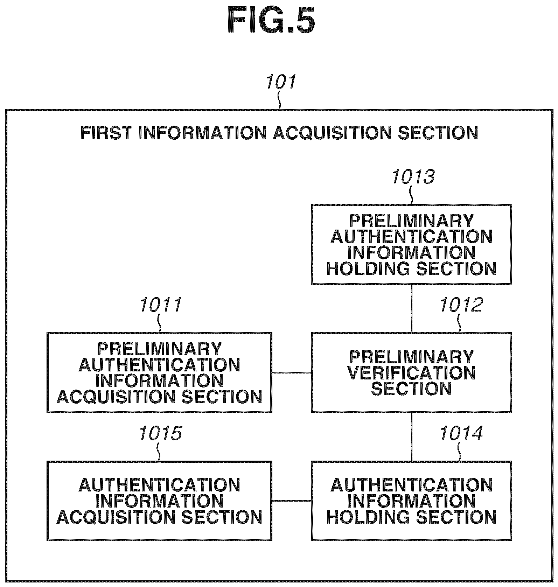

Fig. 5 is a diagram illustrating an example of the configuration of the first information acquisition section 101. Fig. 5 illustrates a case where the first information acquisition section 101 includes a preliminary authentication information acquisition section 1011, a preliminary verification section 1012, a preliminary authentication information holding section 1013, an authentication information holding section 1014, and an authentication information acquisition section 1015.

In the present embodiment, a case is illustrated where, when a photographer issues an imaging instruction while looking into the viewfinder 112, the photographer is authenticated (the photographer is identified) using an eye image of the photographer whose eye is in proximity to the viewfinder 112. However, the method for authenticating the photographer according to the present embodiment is not limited to this example. For example, in a case where the photographer issues an imaging instruction while viewing an image displayed in live view on the display panel included in the operation member 113 without looking into the viewfinder 112, a captured image of the face of a person viewing a screen on which the live view display is performed may be used for the authentication.

For example, the imaging area in this case may be an area in front of the screen on which the live view display is performed, and may be an area including an area at a predetermined distance from the operation member 113. For example, if a distance sensor included in the imaging apparatus 1 determines that the face of the person is within a predetermined distance from the imaging apparatus 1, the imaging apparatus 1 may perform the authentication based on an image of the face. If the size of the face of the person in the captured image is greater than or equal to a predetermined size, the imaging apparatus 1 may perform the authentication based on an image of the face.

The preliminary authentication information acquisition section 1011 acquires an eye image of a photographer (a person A) who looks into the viewfinder 112. As described in the first embodiment, for example, the eye image is obtained by using the eye imaging element 214 and the eye imaging processing circuit 218. The preliminary authentication information acquisition section 1011 calculates (extracts) user preliminary authentication information from the eye image.

The user preliminary authentication information is information that allows the identification of an individual person, and is also termed a feature amount or a feature vector. The feature amount (the user preliminary authentication information) has a property similar to that of the user feature information described in the first embodiment. As described in the first embodiment, the calculation itself of the feature amount (the user preliminary authentication information) can be achieved by, for example, using a known technique in the field of object recognition, face recognition, or iris authentication.

The preliminary verification section 1012 compares user preliminary authentication information acquired by the preliminary authentication information acquisition section 1011 and registrant preliminary authentication information stored in the preliminary authentication information holding section 1013.

The preliminary authentication information holding section 1013 stores pieces of registrant preliminary authentication information regarding people including the person A.

The registrant preliminary authentication information regarding the person A represents a feature amount extracted from an eye image of the person A in advance and includes one or more individuals expected to be users of the imaging apparatus 1.

The preliminary verification section 1012 compares (verifies) user preliminary authentication information and registrant preliminary authentication information. As a result of this comparison, if there is registrant preliminary authentication information of which the similarity to the user preliminary authentication information is greater than or equal to a predetermined value, the preliminary verification section 1012 determines that a photographer identified from the user preliminary authentication information is a registrant identified based on the registrant preliminary authentication information. If the person identified from the registrant preliminary authentication information is the person A, it is determined that the person (the user) who looks into the viewfinder 112 is the person A (the registrant).

If the preliminary verification section 1012 determines that the photographer is the registrant, the authentication information acquisition section 1015 acquires authentication information regarding the photographer. The authentication information holding section 1014 stores the authentication information as registrant feature information.

As the authentication information acquisition section 1015, a section different from the second information acquisition section 104 in Fig. 3 may be used, but the same section as the second information acquisition section 104 may be used. The authentication information acquisition section 1015 may acquire authentication information suitable for "comparison" in the verification section 106 as registrant feature information.

Similarly to the preliminary authentication in the preliminary verification section 1012, if an eye image of a photographer looking into the viewfinder 112 is used for authentication when imaging is performed, the second information acquisition section 104 may acquire user feature information based on an eye image acquired by the preliminary authentication information acquisition section 1011.

If user feature information is acquired in advance and stored in association with registrant preliminary authentication information in the preliminary authentication information holding section 1013, the authentication information acquisition section 1015 may not need to exist.

As described above, in the present embodiment, (the information processing system included in) the imaging apparatus 1 authenticates a photographer (e.g., a person who looks into the viewfinder 112). If the photographer is a registrant, the imaging apparatus 1 stores authentication information regarding the photographer as registrant feature information. Thus, it is possible to further increase the reliability of registrant feature information.

Next, a third embodiment is described. Normally, photographer information is assigned when imaging is performed. However, there is a case where photographer information is not assigned when imaging is performed. That is, there is a case where verification and authentication are not performed when imaging is performed. In this case, the verification and the authentication are performed after the imaging is performed. In the present embodiment, a case is illustrated where in such a case, a photographer is notified that photographer information is not to be assigned, and the photographer is prompted to confirm whether to assign photographer information. As described above, the present embodiment is mainly different from the first and second embodiments in a configuration and processing for issuing a notification in a case where photographer information is not assigned when imaging is performed. Thus, in the description of the present embodiment, portions similar to those in the first and second embodiments are designated by the same signs as the signs in Figs. 1 (including Figs. 1A and 1B) to 5, and are not described in detail.

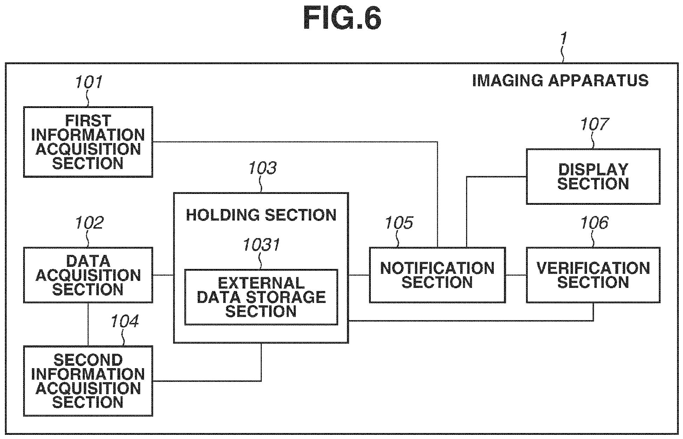

Fig. 6 is a diagram illustrating an example of the functional configuration of (the information processing system included in) the imaging apparatus 1 according to the present embodiment. Fig. 6 illustrates a case where the imaging apparatus 1 further includes a display section 107 in addition to the first information acquisition section 101, the data acquisition section 102, the holding section 103, the second information acquisition section 104, the notification section 105, and the verification section 106.

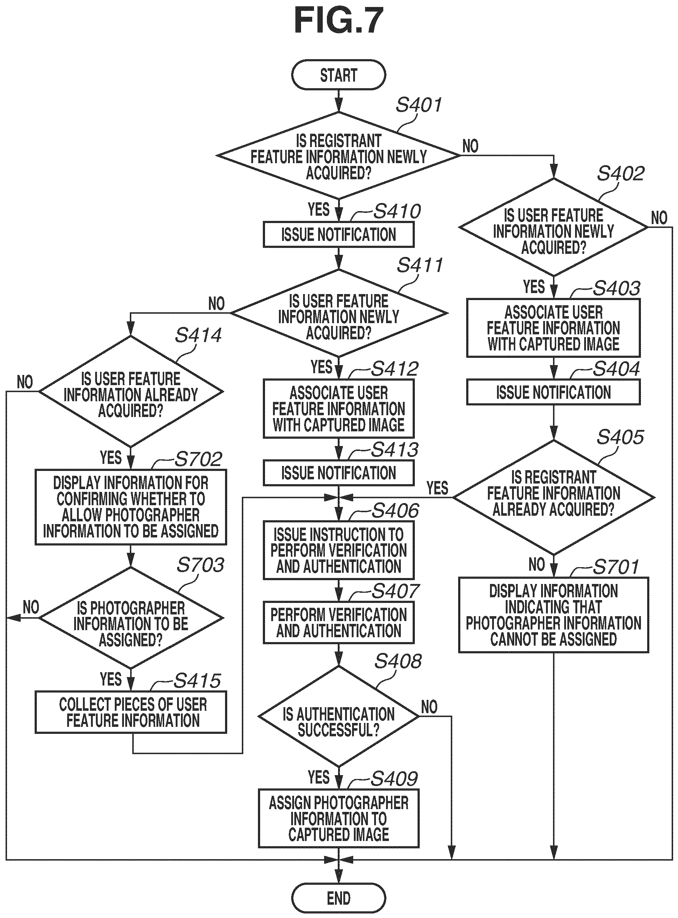

Fig. 7 is a flowchart illustrating an example of the operation of the imaging apparatus 1 according to the present embodiment. The flowchart in Fig. 7 is obtained by adding steps S701 to S703 to the flowchart in Fig. 4.

As described in the first embodiment, as a result of the determination in step S405, if registrant feature information is not already acquired (NO in step S405), since the user feature information is acquired, but registrant feature information is not acquired, photographer information cannot be assigned to the captured image. In this case, in the first embodiment (Fig. 4), the processing of the flowchart in Fig. 4 ends. In contrast, in the present embodiment (Fig. 7), the operation in step S701 is performed.

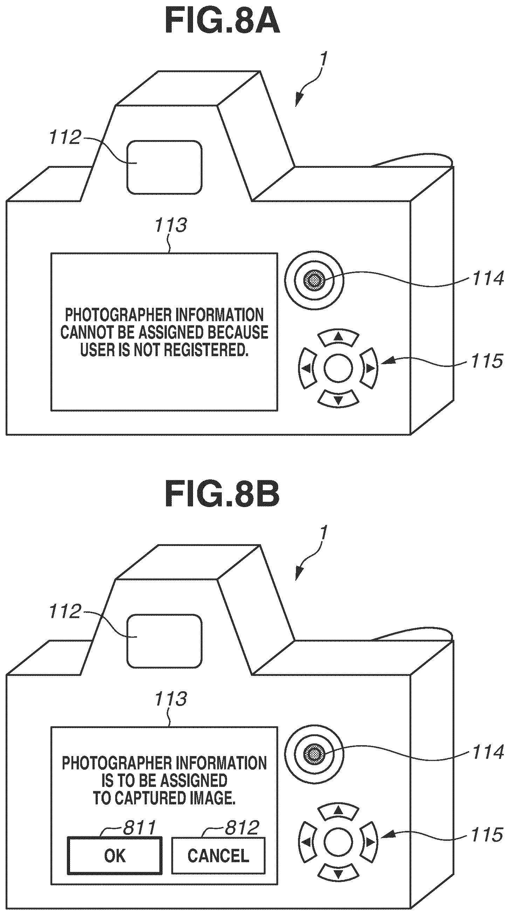

In step S701, the display section 107 displays, on the display panel included in the operation member 113, information indicating that photographer information cannot be assigned to the captured image. Fig. 8A illustrates an example of the information displayed in step S701. The information displayed in step S701 may be displayed on a display apparatus other than the display panel included in the operation member 113. For example, the information displayed in step S701 may be displayed on a display apparatus connected to the imaging apparatus 1 so that the display apparatus can communicate with the imaging apparatus 1.

This also applies to other information displayed on the display panel included in the operation member 113.

As described in the first embodiment, as a result of the determination in step S414, if user feature information is already acquired (YES in step S414), since the registrant feature information is acquired after the imaging is performed, photographer information can be assigned to the captured image. In this case, in the first embodiment (Fig. 4), the operation in step S415 is performed. In contrast, in the present embodiment (Fig. 7), after the processes of steps S702 and S703 are performed, the processes of steps S415, S406, and S407 are performed.

In step S702, the display section 107 displays, on the display panel included in the operation member 113, information for confirming with the photographer whether to allow photographer information to be assigned to the captured image. Fig. 8B illustrates an example of the information displayed in step S702. Fig. 8B illustrates a case where, if the photographer wishes to assign the photographer information to the captured image, the photographer selects an OK button 811. Fig. 8B illustrates a case where, if the photographer does not wish to assign the photographer information to the captured image, the photographer selects a cancel button 812. For example, the OK button 811 and the cancel button 812 may be selected by operating the operation members 114 and 115, or may be selected by pressing the operation member 113 (the touch panel).

Next, in step S703, the notification section 105 determines whether to assign the photographer information to the captured image. In the example illustrated in Fig. 8B, if the OK button 811 is selected, the notification section 105 determines that the photographer information is to be assigned to the captured image. If, on the other hand, the cancel button 812 is selected, the notification section 105 determines that the photographer information is not to be assigned to the captured image. As a result of this determination, if the photographer information is to be assigned to the captured image (YES in step S703), the operation in step S415 (the collection of pieces of user feature information) described in the first embodiment is performed. On the other hand, as a result of the determination in step S703, if the photographer information is not to be assigned to the captured image (NO in step S703), the processing of the flowchart in Fig. 7 ends.

If confirmation of assignment of photographer guarantee information to the captured image is unnecessary, the operation in step S703 (the determination) may not be performed. In this case, after step S702, the operation in step S415 may be performed.

Between steps S411 and S412, processes similar to those of steps S702 and S703 may be performed. In this case, for example, as a result of performing the processes similar to those of steps S702 and S703, if the photographer chooses to assign the photographer information to the captured image, the operation in step S412 is performed.

If, on the other hand, the photographer chooses not to assign the photographer information to the captured image, for example, the operation in step S412 is not performed, and the processing of the flowchart in Fig. 7 ends.

As described above, in the present embodiment, (the information processing system included in) the imaging apparatus 1 notifies a photographer that photographer information cannot be assigned to a captured image. In the present embodiment, the imaging apparatus 1 prompts the photographer to confirm whether to assign the photographer information to the captured image, and then assigns the photographer information to the captured image. Thus, the photographer can know that the photographer information cannot be assigned to the captured image. The photographer can voluntarily determine whether to assign the photographer information to the captured image. Thus, it is possible to prevent a captured image file from being inadvertently altered.

In the first to third embodiments, cases have been illustrated where the imaging apparatus 1 acquires user feature information based on an eye image when imaging is performed. In the first to third embodiments, cases have been illustrated where, after a photographer is authenticated, the imaging apparatus 1 assigns photographer information to a captured image so that the photographer information cannot be falsified. The present disclosure, however, is not limited to this example, and the form for achieving the present disclosure does not matter so long as the spirit of the present disclosure is implemented.

Next, a fourth embodiment is described. In the first to third embodiments, cases have been illustrated where it is based on the premise that the holding section 103 (or the external data storage section 1031) stores a captured image, and a storage medium that stores the captured image is not removed from the imaging apparatus 1. However, there is a case where a storage medium that stores a captured image is removed from the main body of the imaging apparatus 1 and attached to the main body of the imaging apparatus 1 again. Accordingly, in the present embodiment, a case is illustrated where a captured image is stored in a storage medium attachable to and detachable from (removable from and attachable to) the imaging apparatus 1. As described above, the present embodiment is mainly different from the first to third embodiments in a configuration and processing based on the state where a storage medium that stores a captured image is attachable to and detachable from the imaging apparatus 1. Thus, in the description of the present embodiment, portions similar to those in the first to third embodiments are designated by the same signs as the signs in Figs. 1 (including Figs. 1A and 1B) to Fig. 8 (including Figs. 8A and 8B), and are not described in detail.

In the present embodiment, a case is described where, when imaging is performed, registrant feature information is not acquired, and before registrant feature information is acquired after the imaging is performed, the external data storage section 1031 is removed from the imaging apparatus 1 and attached to the imaging apparatus 1 again. In the following description, a storage medium attachable to and detachable from (removable from and attachable to) the imaging apparatus 1 is referred to as an "external storage medium", where necessary.

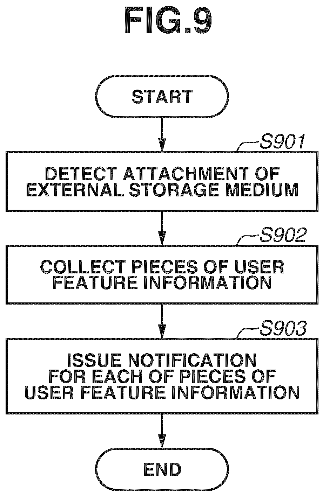

Fig. 9 is a flowchart illustrating an example of the operation of the holding section 103 in a case where the external data storage section 1031 is attached to the imaging apparatus 1.

If an external storage medium removed from the main body of the imaging apparatus 1 is attached to the main body of the imaging apparatus 1, then in step S901, the holding section 103 (the external data storage section 1031) detects the attachment.

Next, in step S902, the external data storage section 1031 collects all pieces of user feature information associated with captured images stored in the external storage medium. The pieces of user feature information collected in step S903 may not include user feature information already used for the verification process by the verification section 106.

Next, in step S903, the external data storage section 1031 notifies the notification section 105 of each of the pieces of user feature information collected in step S902. An example of the operation of the notification section 105 having received this notification is similar to that described in the first embodiment. For example, the operation in step S405 in Fig. 4 or 7 may be performed.

As described above, in the present embodiment, in the state where photographer information is not assigned to a captured image, even if a storage medium that stores the captured image is removed from the imaging apparatus 1 and attached to the imaging apparatus 1 again, it is possible to guarantee the authenticity of a photographer for the captured image.

User feature information may be stored in a storage medium that cannot be removed from the imaging apparatus 1, or the user feature information may be stored together with the captured image in an external storage medium.

Next, a fifth embodiment is described.

User feature information is sensitive information that allows the identification of an individual. In a case where the user feature information is associated with a captured image using hash values, it is desirable that the hash values be not falsified. Accordingly, in the present embodiment, a case is illustrated where a process including encryption is performed on user feature information. As described above, the present embodiment is mainly different from the first to fourth embodiments in a configuration and processing based on the difference in processing on user feature information. Thus, in the description of the present embodiment, portions similar to those in the first to fourth embodiments are designated by the same signs as the signs in Figs. 1 (including Figs. 1A and 1B) to 9, and are not described in detail.

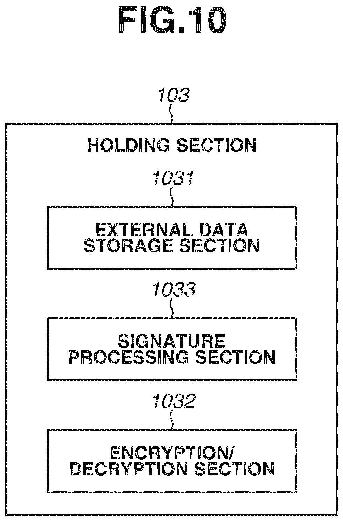

Fig. 10 is a diagram illustrating an example of the configuration of the holding section 103. Fig. 10 illustrates a case where the holding section 103 includes the external data storage section 1031, an encryption/decryption section 1032, and a signature processing section 1033.

The encryption/decryption section 1032 encrypts and decrypts user feature information. The signature processing section 1033 electronically signs user feature information and confirms the signature of the user feature information. When storing user feature information, the holding section 103 (the encryption/decryption section 1032 and the signature processing section 1033) may encrypt and electronically sign the user feature information. When reading user feature information, the holding section 103 (the encryption/decryption section 1032 and the signature processing section 1033) may confirm the signature of the user feature information and decrypt the user feature information. The encryption, the decryption, the electronic signing, and the confirmation of the signature themselves can be achieved by known techniques. Thus, the encryption, the decryption, the electronic signing, and the confirmation of the signature are not described in detail.

As described above, in the present embodiment, (the information processing system included in) the imaging apparatus 1 encrypts and electronically signs user feature information and then stores the user feature information. Thus, even in a case where user feature information is stored in a storage medium attachable to and detachable from the imaging apparatus 1, it is possible to prevent the user feature information from being abused. For example, if user feature information is stored in an external storage medium, there is a high risk that the user feature information is abused. For example, the application of the technique according to the present embodiment to such a case (e.g., the fourth embodiment) is effective. The technique according to the present embodiment may be applied to a case other than the storage medium attachable to and detachable from the imaging apparatus 1.

For example, the technique according to the present embodiment may be applied to user feature information stored in a storage medium outside the imaging apparatus 1 other than the storage medium attachable to and detachable from the imaging apparatus 1. In the present embodiment, it is possible to prevent photographer information from being assigned to a captured image captured by another person.

Next, a sixth embodiment is described. In the fourth embodiment, a case has been illustrated where an external storage medium that stores a captured image to which photographer information is not assigned is removed from the imaging apparatus 1. In the present embodiment, a case is illustrated where in such a case, a photographer is notified of the removal, thereby confirming with this user whether to remove the external data storage section 1031. As described above, the present embodiment is mainly different from the fourth embodiment in a configuration and processing for issuing a notification when the external data storage section 1031 is removed. Thus, in the description of the present embodiment, portions similar to those in the first to fifth embodiments are designated by the same signs as the signs in Figs. 1A and 1B to 10, and are not described in detail.

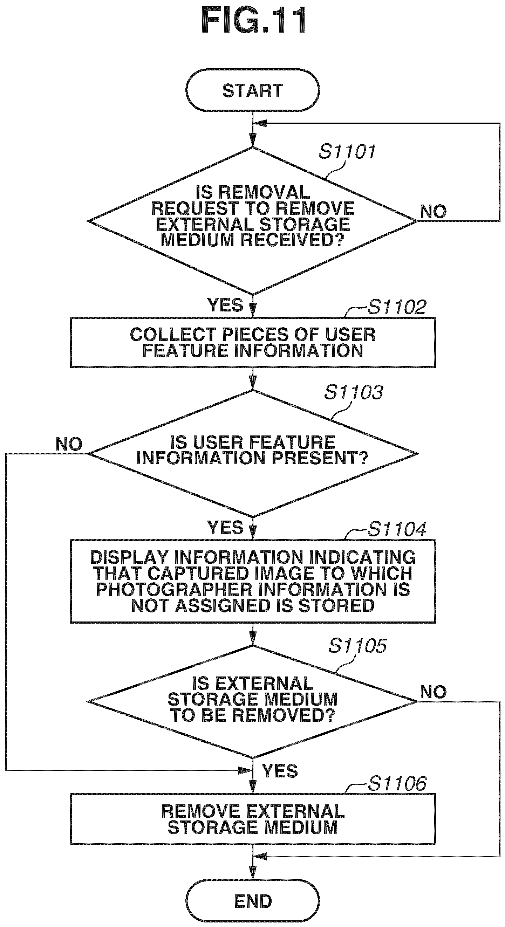

Fig. 11 is a flowchart illustrating an example of the operation of the holding section 103 according to the present embodiment.

In step S1101, the holding section 103 waits to receive a removal request to remove an external storage medium. For example, the removal request occurs by a photographer performing a predetermined operation on any of the operation members 113 to 115.

If a removal request to remove the external storage medium is received, the operation in step S1102 is performed. In step S1102, the external data storage section 1031 collects all pieces of user feature information associated with captured images stored in the external storage medium. The pieces of user feature information collected in step S1102 may not include user feature information already used for the verification process by the verification section 106.

Next, in step S1103, the external data storage section 1031 determines whether user feature information that has not yet been subjected to the verification process is present. As a result of this determination, if user feature information that has not yet been subjected to the verification process is absent (NO in step S1103), the processes of steps S1104 and S1105 are omitted, and the operation in step S1106 is performed. In step S1106, the external data storage section 1031 removes the external storage medium from the imaging apparatus 1.

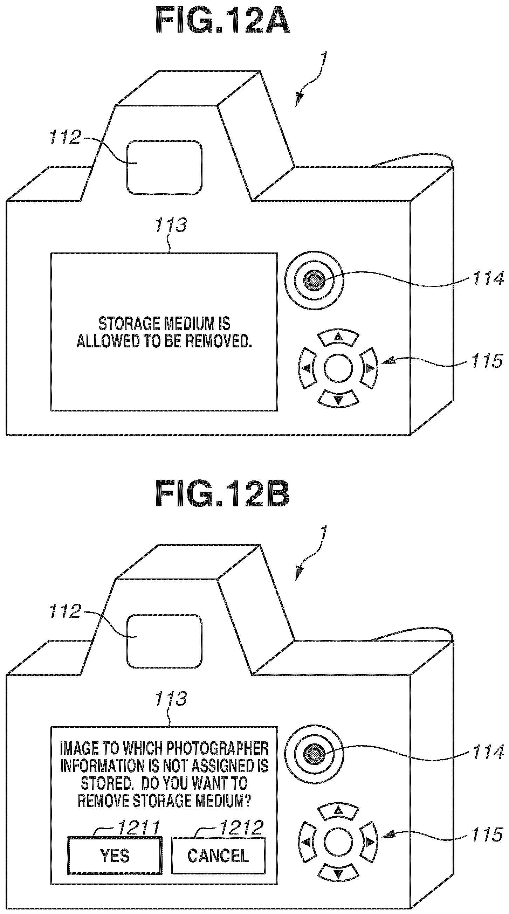

If there is a mechanism for electrically removing the external storage medium, the external storage medium may be removed from the imaging apparatus 1 by the operation of the mechanism. If the external storage medium is manually removed from the imaging apparatus 1, the display section 107 may display, on the display panel included in the operation member 113, information indicating that the external storage medium is allowed to be removed. Fig. 12A illustrates an example of the information displayed in step S1106 in this manner. If the operation in step S1106 is completed, the processing of the flowchart in Fig. 11 ends.

As a result of the determination in step S1103, if user feature information that has not yet been subjected to the verification process is present (YES in step S1103), a captured image to which photographer information is not assigned is stored in the external storage medium. In this case, the operation in step S1104 is performed. In step S1104, the display section 107 displays, on the display panel included in the operation member 113, information indicating that the captured image to which photographer information is not assigned is stored in the external storage medium, and information for causing the user to confirm whether to remove the external storage medium. Fig. 12B illustrates an example of the information displayed in step S1104. Fig. 12B illustrates a case where, if the photographer wishes to remove the external storage medium, the photographer selects an OK button 1211. Fig. 12B illustrates a case where, if the photographer does not wish to remove the external storage medium, the photographer selects a cancel button 1212. For example, the OK button 1211 and the cancel button 1212 may be selected by operating the operation members 114 and 115, or may be selected by pressing the operation member 113 (the touch panel).

Next, in step S1105, the external data storage section 1031 determines whether to remove the external storage medium. In the example illustrated in Fig. 12B, if the OK button 1211 is selected, the external data storage section 1031 determines that the external storage medium is to be removed. If, on the other hand, the cancel button 1212 is selected, the external data storage section 1031 determines that the external storage medium is not to be removed. As a result of this determination, if the external storage medium is not to be removed (NO in step S1105), the processing of the flowchart in Fig. 11 ends. If, on the other hand, the external storage medium is to be removed (YES in step S1105), the operation in step S1106 is performed. In this case, the external storage medium is removed from the imaging apparatus 1.

As described above, in the present embodiment, before a storage medium that stores a captured image to which photographer information has not yet been assigned is removed from the imaging apparatus 1, (the information processing system included in) the imaging apparatus 1 notifies a photographer that the captured image to which photographer information has not yet been assigned is stored in the storage medium. In the present embodiment, the imaging apparatus 1 prompts the photographer to confirm whether to remove the storage medium that stores the captured image to which photographer information has not yet been assigned, and then performs a process for removing the storage medium. Thus, the photographer can know that the storage medium that stores the captured image to which photographer information has not yet been assigned is a storage medium as a removal target. The photographer can voluntarily determine whether to remove the storage medium. Thus, it is possible to prevent user feature information from being abused with higher accuracy. In the present embodiment, it is possible to prevent photographer information from being assigned to a captured image captured by another person with higher accuracy. After the storage medium that stores the captured image to which photographer information has not yet been assigned is removed from the imaging apparatus 1, the notification may be issued.

Next, a seventh embodiment is described. In the fourth and sixth embodiments, cases have been illustrated where a captured image to which photographer information is not assigned is removed from the imaging apparatus 1 using a storage medium attachable to and detachable from the imaging apparatus 1 and further attached to the imaging apparatus 1 again. In the first to sixth embodiments, cases have been illustrated where photographer information is assigned to a captured image in the imaging apparatus 1.

However, a captured image may not necessarily need to be stored in a storage medium removable from the imaging apparatus 1, and photographer information may not necessarily need to be assigned in the imaging apparatus 1. Accordingly, in the present embodiment, a case is illustrated where the imaging apparatus 1 transmits a captured image to an external apparatus, and the external apparatus assigns photographer information to the captured image. As described above, the present embodiment is mainly different from the first to sixth embodiments in a configuration and processing based on the differences in an apparatus that stores a captured image and an apparatus that assigns photographer information. Thus, in the description of the present embodiment, portions similar to those in the first to sixth embodiments are designated by the same signs as the signs in Figs. 1 (including Figs. 1A and 1B) to Fig. 12 (including Figs. 12A and 12B), and are not described in detail.

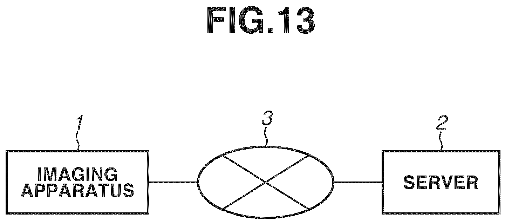

Fig. 13 is a diagram illustrating an example of the configuration of the information processing system. Fig. 13 illustrates a case where the imaging apparatus 1 and an external server 2 are connected together via a network 3 so that the imaging apparatus 1 and the external server 2 can communicate with each other. In this case, the imaging apparatus 1 can transmit a captured image not only to a storage medium removable from the imaging apparatus 1 but also to the server 2. The server 2 can also assign photographer information.

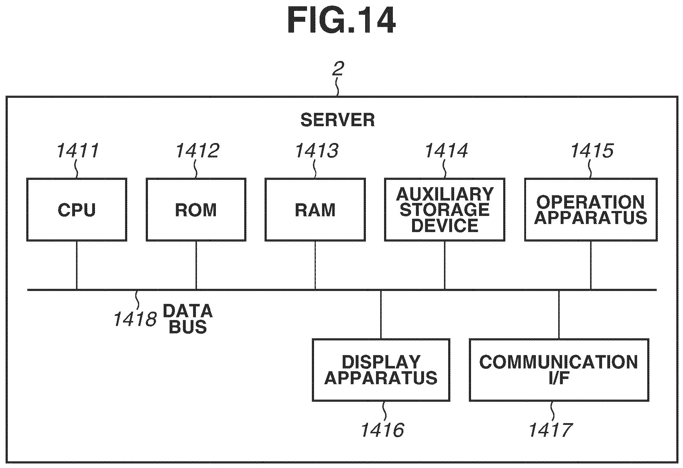

Fig. 14 is a diagram illustrating an example of the hardware configuration of the server 2.

A CPU 1411 controls the entirety of the server 2 using computer programs and various pieces of data, thereby achieving functions included in the server 2. A read-only memory (ROM) 1412 is a non-volatile memory that stores various computer programs and various pieces of data as information required when the CPU 1411 performs processing. A random-access memory (RAM) 1413 is a volatile memory that temporarily stores a computer program and data to be processed by the CPU 1411. For example, the RAM 1413 temporarily stores data and a program control variable to be processed by the CPU 1411. For example, the RAM 1413 is a dynamic random-access memory (DRAM). An auxiliary storage device 1414 is a non-volatile memory that stores various pieces of data that can be changed. The auxiliary storage device 1414 may store a computer program that can be changed among computer programs such as a control program for the CPU 1411. For example, the auxiliary storage device 1414 may be a hard disk drive (HDD), a solid-state drive (SSD), or an embedded MultiMediaCard (eMMC). The auxiliary storage device 1414 may include a plurality of storage devices (e.g., an HDD and an eMMC).

A case is illustrated where in the server 2 according to the present embodiment, a single CPU 1411 executes processes illustrated in a flowchart described below, using a single memory (the RAM 1413). The present disclosure, however, is not necessarily limited to this. For example, the processes illustrated in the flowchart described below may be executed by the cooperation of a plurality of CPUs, RAMs, ROMs, and auxiliary storage devices. At least parts of the processes illustrated in the flowchart may be executed by dedicated hardware. Examples of the dedicated hardware include an ASIC and an FPGA. The processor is not limited to a CPU. For example, the processor may be a GPU.

An operation apparatus 1415 receives operations of a user and outputs various instructions to the CPU 1411. For example, the operation apparatus 1415 includes a keyboard, a pointing device (e.g., a mouse), and a touch panel. A display apparatus 1416 displays various pieces of information.

For example, the display apparatus 1416 displays a graphical user interface (GUI) for the user to operate the server 2. For example, the display apparatus 1416 includes a computer display such as a liquid crystal display and a light-emitting element such as a light-emitting diode (LED). A communication I/F 1417 is an interface for the server 2 to communicate with an external apparatus. In a case where the server 2 is connected to an external apparatus by wire, a communication cable is connected to the communication I/F 1417. In a case where the server 2 has the function of performing wireless communication with an external apparatus, the communication I/F 1417 includes an antenna. A data bus 1418 connects the components of the server 2. The components of the server 2 transmit information via the data bus 1418.

The hardware of the server 2 is not limited to the configuration illustrated in Fig. 14. The hardware itself of the server 2 may be achieved by a known technique.

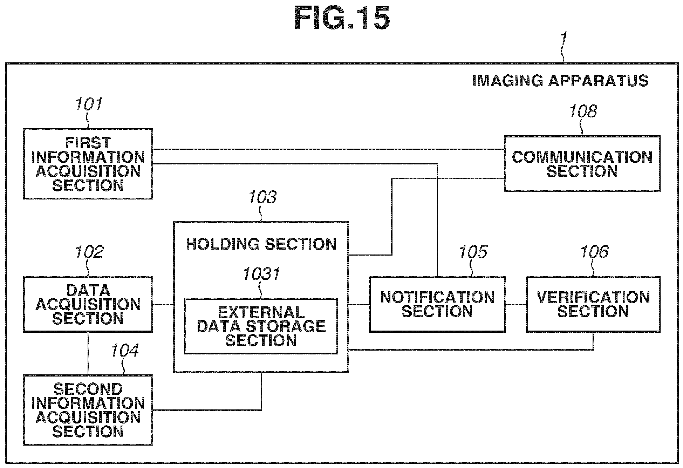

Fig. 15 is a diagram illustrating an example of the functional configuration of (the information processing system included in) the imaging apparatus 1 according to the present embodiment. Fig. 15 illustrates a case where the imaging apparatus 1 further includes a communication section 108 in addition to the first information acquisition section 101, the data acquisition section 102, the holding section 103, the second information acquisition section 104, the notification section 105, and the verification section 106. The imaging apparatus 1 may include the display section 107.

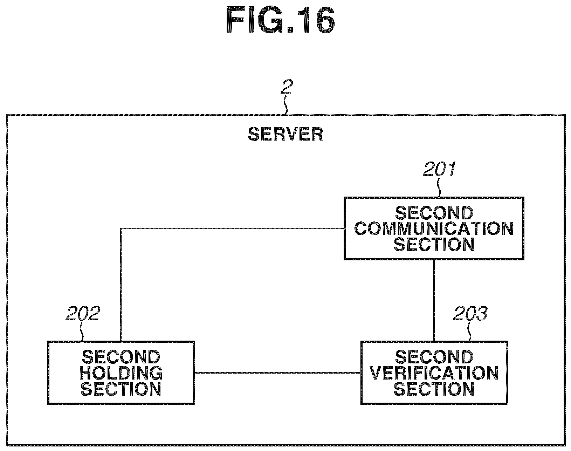

Fig. 16 is a diagram illustrating an example of the functional configuration of the server 2 according to the present embodiment. Fig. 16 illustrates a case where the server 2 includes a second communication section 201, a second holding section 202, and a second verification section 203.

The communication section 108 included in the imaging apparatus 1 and the second communication section 201 included in the server 2 are connected together via the network 3 so that the communication section 108 and the second communication section 201 can communicate with each other. The network 3 may be a wired network, or may be a wireless network. For example, the network 3 may be a local area network (LAN), a wide area network (WAN), the Internet, or the combination of these networks.

First, a captured image to which photographer information is not assigned is stored in the holding section 103 of the imaging apparatus 1. The captured image to which photographer information is not assigned is transmitted from the communication section 108 of the imaging apparatus 1. The second communication section 201 of the server 2 receives the captured image to which photographer information is not assigned. The second holding section 202 stores the captured image to which photographer information is not assigned and which is received by the second communication section 201.

User feature information associated with the captured image is also stored in the second holding section 202 via a path similar to that of the captured image to which photographer information is not assigned.

At least one of the captured image and the user feature information may be transmitted to the server 2 via the network 3 as described above, or may be transmitted to the server 2 by connecting a storage medium (the external data storage section 1031) removable from the imaging apparatus 1 to the server 2.

Next, the first information acquisition section 101 of the imaging apparatus 1 acquires registrant feature information. In the present embodiment, as described above, in the state where registrant feature information is present in the imaging apparatus 1, and a captured image to which photographer information is not assigned and user feature information associated with the captured image are present in the server 2, the server 2 assigns photographer information to the captured image present in the server 2.

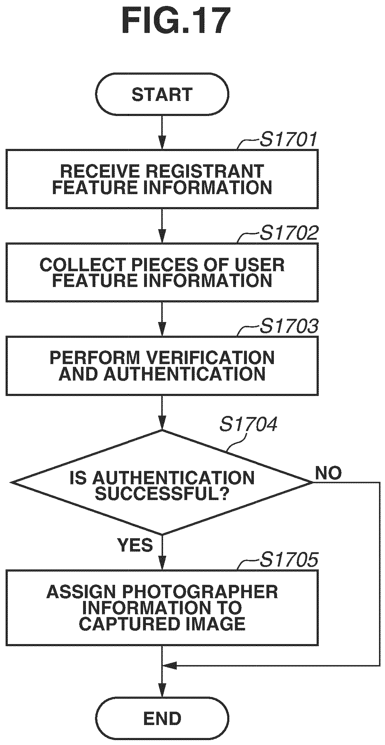

Fig. 17 is a flowchart illustrating an example of the operation of the server 2 according to the present embodiment.

First, in step S1701, the second communication section 201 receives registrant feature information transmitted from the communication section 108 of the imaging apparatus 1.

Next, in step S1702, the second verification section 203 collects all pieces of user feature information associated with captured images. The pieces of user feature information collected in step S1702 may not include user feature information already used for the verification process by the second verification section 203.

With respect to each of the pieces of user feature information collected in step S1702, the following processes (steps S1703 to S1705) are performed.

First, in step S1703, the second verification section 203 compares the registrant feature information and the user feature information, thereby verifying the registrant feature information and the user feature information against each other.

Next, in step S1704, based on the result of the comparison, the second verification section 203 determines whether the authentication of a photographer is successful. For example, this determination is made by determining whether a person identified from the user feature information and a person identified from the registrant feature information are the same person. This process is a process similar to the processing of the verification section 106 that has already been described.

As a result of this determination, if the authentication is successful (YES in step S1704), the operation in step S1705 is performed. In step S1705, the second verification section 203 instructs the second holding section 202 to assign photographer information regarding the successfully authenticated user to the captured image associated with the user feature information used for the verification when it is determined that the authentication is successful, so that the photographer information cannot be falsified. Based on this instruction, the second holding section 202 assigns the photographer information to the captured image so that the photographer information cannot be falsified. The processing of the flowchart in Fig. 17 ends. On the other hand, as a result of the determination in step S1704, if the authentication fails (NO in step S1704), the processing of the flowchart in Fig. 17 ends.

As described above, in the present embodiment, the imaging apparatus 1 transmits a captured image, user feature information, and registrant feature information to the server 2. The server 2 verifies the registrant feature information and the user feature information against each other, and based on the result of the verification, assigns photographer information to the captured image. Thus, to a captured image to which photographer information is not assigned at the time when the captured image is removed from the imaging apparatus 1, it is possible to assign photographer information outside the imaging apparatus 1. Photographer information assigned to a captured image by the imaging apparatus 1 and photographer information assigned to the captured image by the server 2 may be the same as or different from each other. For example, information regarding the type of a device that assigns photographer information may be included in the photographer information.

Next, an eighth embodiment is described. In the seventh embodiment, a case has been illustrated where the imaging apparatus 1 transmits registrant feature information to the server 2, and the server 2 performs the verification and authentication process. In contrast, in the present embodiment, a case is illustrated where the imaging apparatus 1 performs the verification and authentication process. As described above, the present embodiment is mainly different from the seventh embodiment in a configuration and processing based on the difference in an apparatus that performs the verification and authentication process. Thus, in the description of the present embodiment, portions similar to those in the first to seventh embodiments are designated by the same signs as the signs in Figs. 1 (including Figs. 1A and 1B) to 17, and are not described in detail.

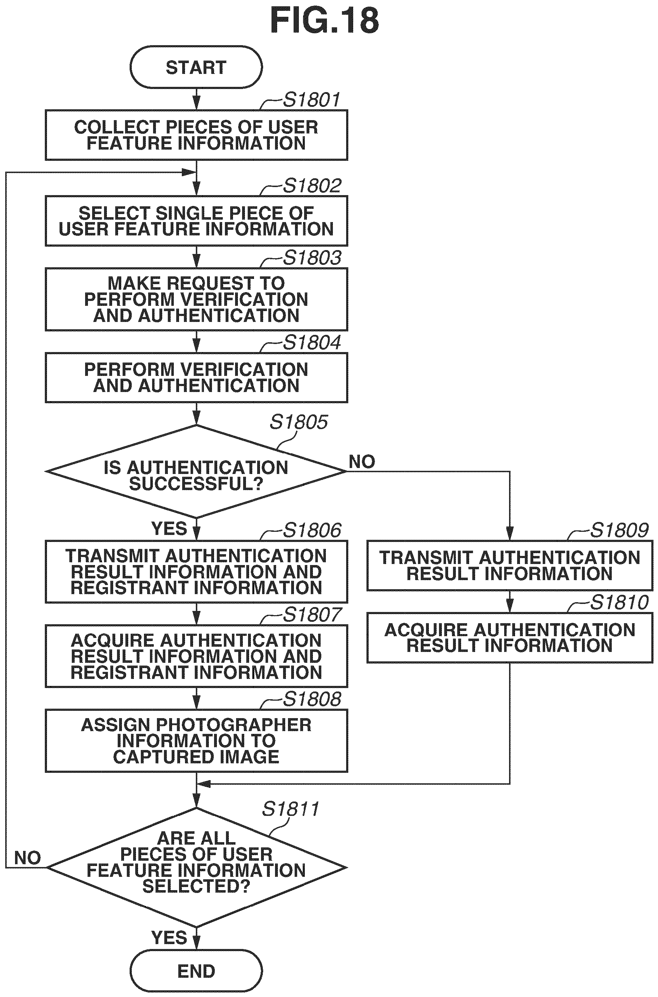

Fig. 18 is a flowchart illustrating an example of the operation of the information processing system (the imaging apparatus 1 and the server 2) according to the present embodiment.

First, in step S1801, the second verification section 203 collects all pieces of user feature information associated with captured images. The pieces of user feature information collected in step S1801 may not include user feature information already used for the verification process by the second verification section 203.

With respect to each of the pieces of user feature information collected in step S1801, the following processes (steps S1802 to S1811) are performed.

First, in step S1802, the second verification section 203 selects a single piece of user feature information that has not yet been selected among the pieces of user feature information collected in step S1801.

Next, in step S1803, the second verification section 203 requests the imaging apparatus 1 to verify and authenticate the user feature information selected in step S1802, via the second communication section 201.

Next, in step S1804, if the verification section 106 acquires the request to verify and authenticate the user feature information via the communication section 108, the verification section 106 compares registrant feature information and the user feature information, thereby verifying the registrant feature information and the user feature information against each other.

Next, in step S1805, based on the result of the comparison in step S1804, the verification section 106 determines whether the authentication of a photographer is successful.

The processes of steps S1804 and S1805 are similar to the verification and authentication process that has already been described (see steps S407 and S408).

As a result of this determination, if the authentication is successful (YES in step S1805), the operation in step S1806 is performed. In step S1806, the communication section 108 transmits, to the server 2, authentication result information indicating that the authentication is successful and registrant information used for the verification when it is determined that the authentication is successful. As described above, the imaging apparatus 1 according to the present embodiment transmits not registrant feature information regarding the feature of a registrant, but registrant information (e.g., identification information regarding the registrant) to the server 2. This provides the advantage that the registrant feature information can be handled more securely.

Next, in step S1807, the second verification section 203 acquires the authentication result information and the registrant information transmitted in step S1806, via the second communication section 201. In step S1807, based on the authentication result information, the second verification section 203 determines whether photographer information is to be assigned to the captured image. In the description of this flowchart, since the authentication is successful in step S1805, the second verification section 203 determines that photographer information is to be assigned to the captured image. Then, the processing proceeds to step S1808.

Next, in step S1808, the second verification section 203 instructs the second holding section 202 to assign photographer information regarding the successfully authenticated user to the captured image associated with the user feature information selected in step S1802, so that the photographer information cannot be falsified. Based on this instruction, the second holding section 202 assigns the photographer information to the captured image so that the photographer information cannot be falsified. The operation in step S1811 is performed.

As a result of the determination in step S1805, if the authentication fails (NO in step S1805), the operation in step S1809 is performed. In step S1809, the communication section 108 transmits, to the server 2, authentication result information indicating that the authentication fails.

Next, in step S1810, the second verification section 203 acquires the authentication result information transmitted in step S1809 via the second communication section 201. In step S1810, based on the authentication result information, the second verification section 203 determines whether photographer information is to be assigned to the captured image. In the description of this flowchart, since the authentication fails in step S1805, the second verification section 203 determines that photographer information is not to be assigned to the captured image. Then, the processing proceeds to step S1811. In this case, photographer information is not assigned to the captured image. The operation in step S1811 is performed.

In step S1811, the second verification section 203 determines whether all the pieces of user feature information collected in step S1801 are selected. As a result of this determination, if not all the pieces of user feature information collected in step S1801 are selected (NO in step S1811), the operation in step S1802 is performed again. The processes of steps S1802 to S1811 are repeated until it is determined in step S1811 that all the pieces of user feature information collected in step S1801 are selected. If it is determined in step S1811 that all the pieces of user feature information collected in step S1801 are selected (YES in step S1811), the processing of the flowchart in Fig. 18 ends.

For example, in step S1803, the server 2 (the second verification section 203) may collectively request the imaging apparatus 1 to verify and authenticate all the pieces of user feature information collected in step S1801. In this case, the processes of steps S1802 and S1811 may not be performed. The processes of steps S1804 and S1805 are individually performed on all the pieces of user feature information collected in step S1801. Based on the result of the determination in step S1805 (the result of determining whether the authentication is successful), the following process may be performed.

For example, the communication section 108 may transmit, to the server 2, all sets of pieces of registrant information and pieces of user feature information used for the verification when it is determined that the authentication is successful, or all pieces of information that allow the identification of the pieces of user feature information. For example, the communication section 108 may transmit, to the server 2, all pieces of user feature information used for the verification when it is determined that the authentication fails, or all pieces of information that allow the identification of the pieces of user feature information.

As described above, in the present embodiment, the server 2 requests the imaging apparatus 1 to authenticate a photographer. Based on this request, the imaging apparatus 1 performs the verification and authentication process. If the authentication of the photographer is successful, the imaging apparatus 1 transmits, to the server 2, registrant information used for the verification when it is determined that the authentication is successful. If the server 2 receives the registrant information, the server 2 assigns photographer information regarding the photographer that the server 2 has requested the imaging apparatus 1 to authenticate to a captured image. The server 2 according to the present embodiment assigns the registrant information received from the imaging apparatus 1 as the photographer information to the captured image. That is, to a captured image to which photographer information is not assigned at the time when the captured image is removed from the imaging apparatus 1, the server 2 can assign photographer information outside the imaging apparatus 1. In the present embodiment, registrant feature information regarding the feature of a registrant is not communicated on a network, and registrant information (e.g., identification information regarding the registrant) is communicated. This provides the advantage that the registrant feature information can be handled more securely.

Next, a ninth embodiment is described. In the first to eighth embodiments, cases have been described where user feature information acquired by the imaging apparatus 1 is of a single type. In the present embodiment, a case is illustrated where pieces of user feature information of a plurality of types (two or more types) are acquired by an imaging apparatus.

In the present embodiment, for example, in the state where pieces of user feature information of a plurality of types are acquired when imaging is performed, if registrant feature information is acquired after the imaging is performed, registrant feature information of a type selected from among the plurality of types is acquired. In this manner, for example, it is possible to acquire registrant feature information that is authenticated more easily. Thus, it is possible to perform more accurate authentication. For example, suppose that an eye image and a fingerprint are acquired as pieces of user feature information when imaging is performed. In this case, if the eye image is captured under strong illumination, there is a case where the luminance of the eye image is high. In this case, there is a possibility that the eye image is an image unsuitable for authentication. On the other hand, the fingerprint can be acquired as information suitable for authentication, regardless of the illumination condition. Thus, the fingerprint is acquired as registrant feature information, whereby it is possible to increase the accuracy of authentication. For example, if the photographer's fingers are affected by skin irritation, fingerprints may not be suitable for authentication. In such cases, eye images may be more suitable for authentication than fingerprints.

The description has been issued taking the eye image and the fingerprint as examples. However, which type of feature information is suitable for authentication differs depending on the situation where imaging is performed. Thus, the acquisition of pieces of user feature information of a plurality of types is effective. As described above, the present embodiment is mainly different from the first to eighth embodiments in a configuration and processing for acquiring registrant feature information. Thus, in the description of the present embodiment, portions similar to those in the first to eighth embodiments are designated by the same signs as the signs in Figs. 1 (including Figs. 1A and 1B) to 18, and are not described in detail. In the present embodiment, "the type of feature information" refers to the type of a feature on which the feature information is based, unless there is a misunderstanding. In the present embodiment, the following description is issued taking as an example a case where an eye image, a face image, a fingerprint, and voice are acquired as pieces of user feature information.

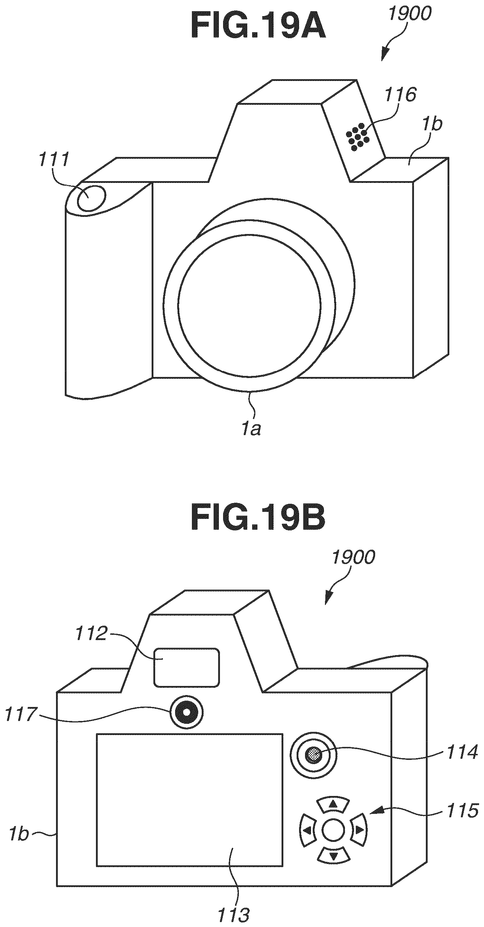

Figs. 19A and 19B are diagrams illustrating an example of the external configuration of an imaging apparatus according to the present embodiment. Fig. 19A is an example of a perspective view of the front side of an imaging apparatus 1900. Fig. 19B is an example of a perspective view of the back side of the imaging apparatus 1900.

In Fig. 19A, the imaging apparatus 1900 is different from the imaging apparatus 1 illustrated in Figs. 1A and 1B in the following respects. In the imaging apparatus 1900 according to the present embodiment, the shutter release button 111 includes a fingerprint sensor. The imaging apparatus 1900 according to the present embodiment includes a microphone 116 for acquiring the voice of a photographer, and a face authentication camera 117 for acquiring a face image of a photographer, as components that are not included in the imaging apparatus 1 illustrated in Fig. 1A and 1B.

Also in the imaging apparatus 1900 according to the present embodiment, similarly to the imaging apparatus 1 illustrated in Fig. 1A and 1B, a photographer looks into the viewfinder 112, whereby data of an eye image of the photographer is acquired.

In the imaging apparatus 1900 according to the present embodiment, the face authentication camera 117 captures a face image of a photographer whose face is turned toward the face authentication camera 117, whereby data of the face image of the photographer is acquired. Similarly to the imaging apparatus 1 illustrated in Fig. 1A and 1B, data of a face image of a photographer viewing an image displayed in live view on the display panel included in the operation member 113 may be acquired.

In the imaging apparatus 1900 according to the present embodiment, the fingerprint sensor included in the shutter release button 111 reads a fingerprint of a finger of a photographer in contact with the shutter release button 111, whereby data of the fingerprint of the photographer is acquired.

In the imaging apparatus 1900 according to the present embodiment, the microphone 116 collects the sound of the voice of a photographer on the periphery of the imaging apparatus 1900, whereby data of the voice produced by the photographer is acquired.

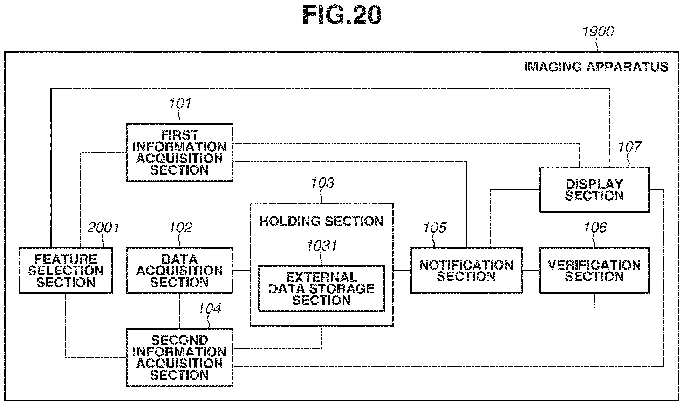

Fig. 20 is a diagram illustrating an example of the functional configuration of (an information processing system included in) the imaging apparatus 1900.

Fig. 20 illustrates a case where the imaging apparatus 1900 includes a first information acquisition section 101, a data acquisition section 102, a holding section 103, a second information acquisition section 104, a notification section 105, a verification section 106, a display section 107, and a feature selection section 2001.

The first information acquisition section 101 acquires registrant feature information. The first information acquisition section 101 acquires, as the registrant feature information, information regarding a feature of a type selected by the feature selection section 2001 based on the type of user feature information already acquired by the second information acquisition section 104. If pieces of user feature information of a plurality of types regarding the same person are acquired earlier by the second information acquisition section 104, the first information acquisition section 101 acquires, as the registrant feature information, information regarding a feature of a type selected by the feature selection section 2001 based on the pieces of user feature information of the plurality of types. "The type of a feature" refers to the type of data from which user feature information is calculated. For example, data of an eye image, a face image, a fingerprint, and voice is acquired, the number of types of features is four.

The second information acquisition section 104 acquires user feature information. The second information acquisition section 104 can acquire pieces of user feature information of a plurality of types regarding the same person. For example, as described above, user feature information is calculated by executing predetermined conversion on data acquired by the microphone 116, the face authentication camera 117, the shutter release button 111 (the fingerprint sensor), and the eye imaging element 214. The predetermined conversion itself is achieved by using a known technique, and therefore is not described in detail.

If user feature information is associated with a captured image stored in the holding section 103 and registrant feature information has not yet been acquired by the first information acquisition section 101, the feature selection section 2001 selects the type of registrant feature information to be acquired by the first information acquisition section 101. Based on an operation of a user (a registrant registered as a user of the imaging apparatus 1900), the feature selection section 2001 may select the type of registrant feature information to be acquired by the first information acquisition section 101. The operation of the user (the registrant) is an operation of specifying one or more types from among the types of pieces of user feature information acquired by the imaging apparatus 1900.

For example, suppose that in a case where an eye image, a face image, a fingerprint, and voice are acquired as pieces of user feature information, the eye image, the fingerprint, and the voice are specified by the operation of the user (the registrant).

In this case, the feature selection section 2001 selects the eye image, the fingerprint, and the voice as the types of pieces of registrant feature information to be acquired by the first information acquisition section 101. The first information acquisition section 101 acquires the pieces of registrant feature information (the eye image, the fingerprint, and the voice) of the types selected by the feature selection section 2001 in this manner. The verification section 106 verifies registrant feature information and user feature information of the same type against each other, thereby authenticating a photographer. If pieces of user feature information of a plurality of types are acquired by the second information acquisition section 104 and stored in the holding section 103, the feature selection section 2001 may select features of all the types, or may select features of one or more types without depending on the operation of the user (the registrant). In the present embodiment, a description is issued taking as an example a case where the feature selection section 2001 selects the types of features based on the operation of the user (the registrant). In this case, the display panel included in the operation member 113 may display information indicating the types of features acquired by the second information acquisition section 104. In this case, the user (the registrant) performs an operation for specifying the types of features to be acquired as pieces of registrant feature information, using the operation members 113 to 115.

If the feature selection section 2001 does not select a feature of any type, the first information acquisition section 101 may not acquire registrant feature information.

If the feature selection section 2001 selects features of a plurality of types, then at the time when registrant features of all the selected types are acquired, the notification section 105 may notify the verification section 106 that registrant feature information and user feature information can be verified against each other. At the time when registrant features of any one or more types are acquired among the types of the features selected by the feature selection section 2001, the notification section 105 may notify the verification section 106 that registrant feature information and user feature information can be verified against each other.

If the types of the features selected by the feature selection section 2001 are a single type, the verification section 106 verifies registrant feature information and user feature information against each other using information of this type as the registrant feature information and the user feature information. In the present embodiment, a case is illustrated where, if the feature selection section 2001 does not select any type of a feature, the first information acquisition section 101 does not acquire registrant feature information. In this case, the verification section 106 does not verify registrant feature information and user feature information against each other. If the feature selection section 2001 does not select any type of a feature, the verification section 106 may perform verification.

For example, if the feature selection section 2001 does not select any type of a feature, the verification section 106 may verify registrant feature information and user feature information against each other using pieces of information of one or more types set in advance as the registrant feature information and the user feature information.

If the feature selection section 2001 selects features of a plurality of types, the verification section 106 may determine the final verification result (the result of authentication) based on the result of verifying each of the plurality of types.

For example, the verification section 106 individually verifies registrant feature information and user feature information against each other with respect to each type, and if the verification results regarding all the types indicate the same person, the verification section 106 can determine that the authentication of a photographer is successful, and perform a predetermined operation. That the verification results indicate the same person means that an actual user (a photographer) of the imaging apparatus 1900 and a registrant registered as a user of the imaging apparatus 1900 are the same person. In the following description, the actual user (the photographer) of the imaging apparatus 1900 and the registrant registered as the user of the imaging apparatus 1900 being the same person is referred to simply as "the photographer and the registrant are the same person", where necessary.

If there are a feature regarding which the photographer and the registrant are determined as the same person and a feature regarding which the photographer and the registrant are determined as not the same person in verification, the verification section 106 may determine the final verification result (the result of authentication) by combining these verification results.

For example, the verification section 106 may determine the final verification result based on a majority vote or a weighted majority vote on verification results. The weighted majority vote is a majority vote that can be taken using as the number of the success or failure of a single verification result a value other than 1 according to the degree of importance of the verification result. The verification section 106 may calculate a score indicating the degree of authentication based on registrant feature information and user feature information and determine the final verification result using the weighted average value of the score. For example, the verification section 106 may represent the registrant feature information and the user feature information by vectors and calculate cosine similarity as an example of the score using the vectors. However, the score is not limited to cosine similarity, and may be a score calculated using another known technique.

The method for combining verification results is not limited to the above methods so long as it can be uniquely determined whether the photographer and the registrant are the same person using the verification results regarding a feature (registrant feature information and user feature information) of each type. If there are a feature regarding which the photographer and the registrant are determined as the same person and a feature regarding which the photographer and the registrant are determined as not the same person in verification, the verification section 106 may reserve the determination of the success or failure of authentication. In this case, the imaging apparatus 1900 may urge the user (the registrant) to acquire registrant feature information again. In this case, if the authentication of the photographer is successful based on the result of verifying the registrant feature information acquired again and user feature information of the same type as that of the registrant feature information against each other, the verification section 106 performs the above predetermined operation.

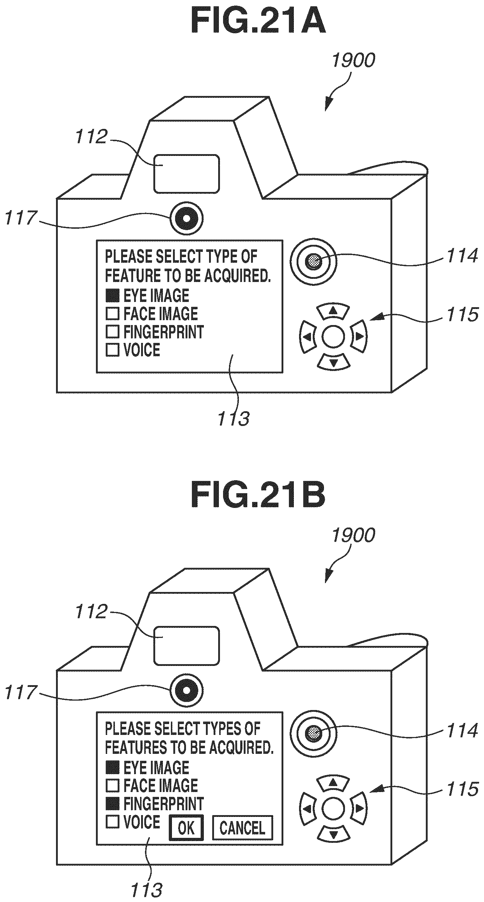

The display section 107 displays information to which the user (the registrant) refers to specify the types of features. Figs. 21A and 21B are diagrams illustrating examples of the information to which the user (the registrant) refers to specify the types of features. Fig. 21A illustrates a case where checkboxes for selecting an eye image, a face image, a fingerprint, and voice are displayed below the wording "please select type of feature to be acquired" on the display panel included in the operation member 113. To enable the user (the registrant) to specify features of a plurality of types, then as illustrated in Fig. 21B, the display section 107 may further display an OK button and a cancel button. In this case, the user (the registrant) specifies one or more types as the types of features to be acquired as pieces of registrant feature information and then presses the OK button. The timing when the information to which the user (the registrant) refers to specify the types of features is displayed is, for example, the time when imaging is performed or the time when authenticity information (photographer information) is assigned after the imaging is performed. A case is illustrated where the information to which the user (the registrant) refers to specify the types of features is displayed on the display panel included in the operation member 113. However, the medium for displaying the information to which the user (the registrant) refers to specify the types of features is not limited. The information to which the user (the registrant) refers to specify the types of features may be voice.

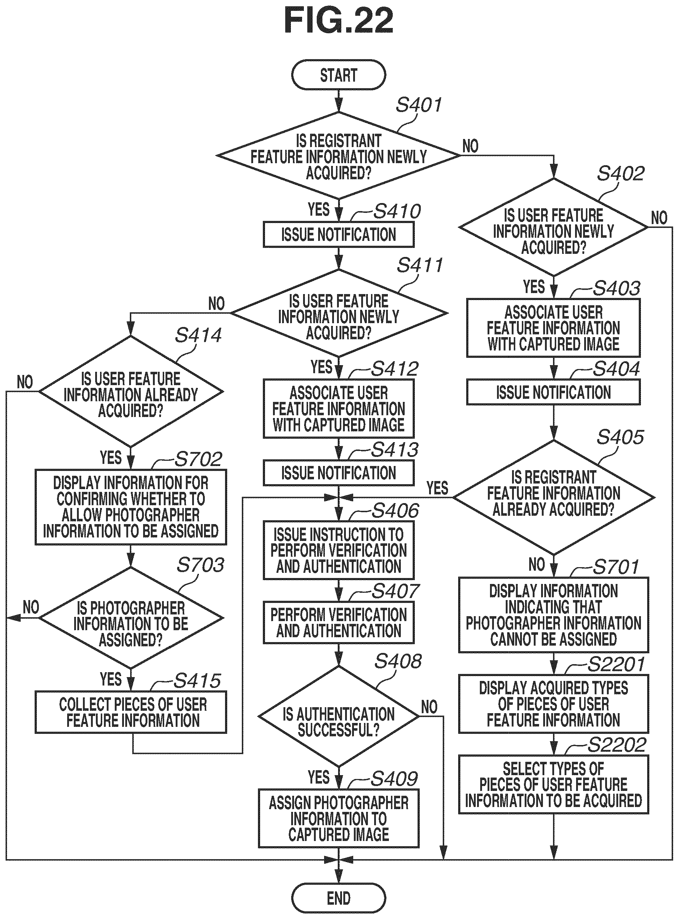

Fig. 22 is a flowchart illustrating an example of the operation of the imaging apparatus 1900 according to the present embodiment.

The flowchart in Fig. 22 is obtained by adding steps S2201 and S2202 to the flowchart in Fig. 7.

As described in the third embodiment, as a result of the determination in step S405, if registrant feature information is not already acquired (NO in step S405), the operation in step S701 is performed. In step S701, the display section 107 displays, on the display panel included in the operation member 113, information indicating that photographer information cannot be assigned to the captured image. In the third embodiment (Fig. 7), if the operation in step S701 is completed, the processing of the flowchart in Fig. 7 ends. In contrast, in the present embodiment (Fig. 22), after step S701, the operation in step S2201 is performed.

In step S2201, the display section 107 displays, on the display panel included in the operation member 113, the types of pieces of user feature information acquired by the second information acquisition section 104. An example of the information displayed in step S2201 is the information illustrated in Fig. 21A or 21B.

Next, in step S2202, the feature selection section 2001 selects the types of pieces of registrant feature information to be acquired by the first information acquisition section 101. At this time, a user (a registrant) can use the operation members 113 to 115 to specify the types of pieces of registrant feature information. In a case where authenticity is guaranteed in the state where the types of pieces of registrant feature information are specified in step S2202, the pieces of registrant feature information of the types selected in step S2202 are acquired. The timing when the types of pieces of registrant feature information are specified is not limited to the timing of step S2202. For example, in a case where it is troublesome to specify the types of pieces of registrant feature information when imaging is performed, the types of pieces of registrant feature information may be specified at the timing when a series of imaging operations ends.

In step S407, verification is performed using the pieces of registrant feature information and the pieces of user feature information of the types selected as described above.

As described above, in the present embodiment, if registrant feature information is not present when imaging is performed, (the information processing system included in) the imaging apparatus 1900 selects the types of features to be acquired as pieces of registrant feature information from among pieces of user feature information of a plurality of types. Thus, for example, it is possible to acquire registrant feature information of a type that is authenticated more easily. Thus, it is possible to perform more accurate authentication.

### [Variations]

The present embodiment has been described taking as an example a case where biological information such as an eye image, a face image, a fingerprint, and voice is acquired as registrant feature information and user feature information. However, the registrant feature information and the user feature information may not need to be biological information. For example, a photographer may be caused to input information other than biological information, such as a password or a Personal Identification Number (PIN) code, whereby the input information may be used as user feature information and registrant feature information. The imaging apparatus 1900 and a terminal apparatus owned by a photographer may be enabled to be paired using Bluetooth^{®} (registered trademark), and information regarding the terminal apparatus may be used as user feature information. For example, the terminal apparatus is a smartphone or a tablet.

Next, a tenth embodiment is described. In the ninth embodiment, a case has been described where the first information acquisition section 101 acquires registrant feature information of a type selected by the feature selection section 2001 based on the type of user feature information acquired by the second information acquisition section 104. The type of registrant feature information can also be selected based on a predetermined condition regarding user feature information or a predetermined condition regarding an information processing apparatus used to acquire user feature information. Accordingly, in the present embodiment, a case is illustrated where the type of registrant feature information is selected based on a predetermined condition regarding user feature information or an information processing apparatus. For example, the predetermined condition refers to a condition based on the quantitative evaluation of already acquired user feature information or a condition based on the state of the information processing apparatus. For example, if an already acquired user feature is an eye image, the predetermined condition may be a condition for the image quality of the eye image. The predetermined condition may be the powering off of the information processing apparatus. As described above, the present embodiment is mainly different from the ninth embodiment in a configuration and processing for acquiring registrant feature information. Thus, in the description of the present embodiment, portions similar to those in the first to ninth embodiments are designated by the same signs as the signs in Figs. 1 (including Figs. 1A and 1B) to 22, and are not described in detail. In the present embodiment, "the type of feature information (registrant feature information and user feature information)" refers to the type of a feature on which the feature information is based, unless there is a misunderstanding.

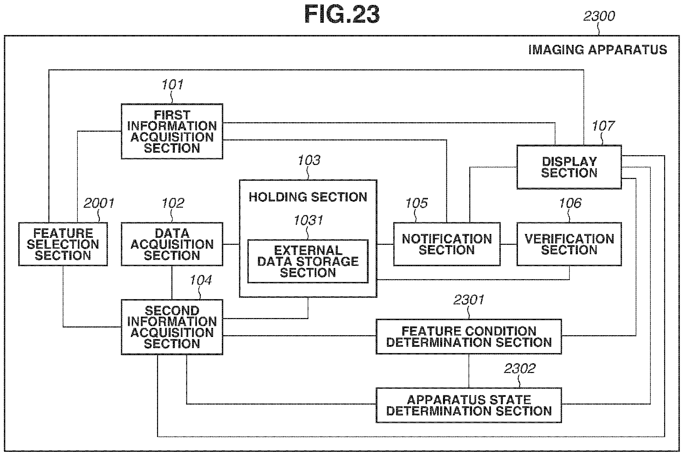

Fig. 23 is a diagram illustrating an example of the functional configuration of (an information processing system included in) an imaging apparatus 2300 according to the present embodiment.

Fig. 23 illustrates a case where the imaging apparatus 2300 includes a first information acquisition section 101, a data acquisition section 102, a holding section 103, a second information acquisition section 104, a notification section 105, a verification section 106, a display section 107, and a feature selection section 2001. Fig. 23 illustrates a case where the imaging apparatus 2300 further includes a feature condition determination section 2301 and an apparatus state determination section 2302.

If user feature information is associated with a captured image stored in the holding section 103 and registrant feature information has not yet been acquired by the first information acquisition section 101, the feature selection section 2001 selects the type of registrant feature information to be acquired by the first information acquisition section 101. In the present embodiment, based on the determination results of the feature condition determination section 2301 and the apparatus state determination section 2302 and the type of an already acquired user feature, the feature selection section 2001 selects the type of a registrant feature to be acquired by the first information acquisition section 101. At this time, a user (a registrant registered as a user of the imaging apparatus 2300) refers to information displayed on the display panel included in the display section 107 and specifies the type of registrant feature information. The feature selection section 2001 selects the type specified by the user (the registrant) as the type of a registrant feature to be acquired by the first information acquisition section 101. The details of an example of the method for selecting the type of a registrant feature to be acquired by the first information acquisition section 101 will be described after the descriptions of the feature condition determination section 2301 and the apparatus state determination section 2302.

The feature condition determination section 2301 determines whether to leave each of pieces of user feature information of one or more types acquired by the second information acquisition section 104 as an option (available user feature information). The feature condition determination section 2301 makes this determination based on whether a predetermined condition defined using the user feature information is satisfied. In the following description, the predetermined condition defined using the user feature information is referred to as a "feature condition", where necessary. The feature condition may be a condition for evaluating the accuracy of verification (authentication) in a case where the user feature information is used. In this case, user feature information of a type that satisfies the feature condition can be excluded from options as user feature information likely to cause incorrect authentication when authentication is performed. For example, the feature condition may be a condition using the value of an evaluation index for evaluating the accuracy of verification (authentication) in a case where the user feature information acquired by the second information acquisition section 104 is used. By using the evaluation index, for example, it is possible to evaluate whether the user feature information acquired by the second information acquisition section 104 is to be used for verification in the verification section 106.

For example, the evaluation index may be a verification matching likelihood indicating a value such that the higher the possibility of correct verification in the execution of verification is, the greater the value is. In this case, the feature condition may be that the verification matching likelihood does not exceed a predetermined value. In a case where pieces of user feature information are sorted in descending order based on the verification matching likelihood, user feature information ranked lower than a predetermined number of top pieces of user feature information may be user feature information that satisfies the feature condition. A case is illustrated where according to an apparatus condition (to exclude user feature information that satisfies the condition from options), user feature information of a type that satisfies the feature condition is excluded from the options as user feature information likely to cause incorrect authentication when authentication is performed. However, the feature condition may be defined so that user feature information of a type that does not satisfy the feature condition is excluded from the options as user feature information likely to cause incorrect authentication when authentication is performed. That is, the feature condition may be defined so that user feature information of a type that does not satisfy the feature condition is excluded from the options as user feature information likely to cause incorrect authentication when authentication is performed.

In a case where user feature information is an eye image, for example, the verification matching likelihood may be calculated using a trained model subjected to machine learning so that with an eye image as an input, the more appropriate the eye proximity position is, the higher the score indicated by the verification matching likelihood is. In a case where user feature information is a fingerprint, for example, the verification matching likelihood may be calculated using a trained model subjected to machine learning so that with a fingerprint image as an input, the more appropriate the position where the fingerprint is applied is, the higher the score indicated by the verification matching likelihood is. The method for calculating the verification matching likelihood is not limited to these, and may be any method capable of calculating a quantitative value as the value of the verification matching likelihood. The verification matching likelihood is calculated from when user feature information is acquired by the second information acquisition section 104 to when the feature condition determination section 2301 determines whether the user feature information satisfies the feature condition. The verification matching likelihood may be calculated by the feature condition determination section 2301 or by another portion (e.g., the second information acquisition section 104).

Similarly to the feature condition determination section 2301, the apparatus state determination section 2302 also determines whether to leave each of pieces of user feature information of one or more types acquired by the second information acquisition section 104 as an option (available user feature information). The apparatus state determination section 2302, however, makes this determination based on whether a predetermined condition defined using the state of an information processing apparatus is satisfied. In the following description, the predetermined condition defined using the state of the information processing apparatus is referred to as an "apparatus condition", where necessary. The apparatus condition may be a condition for evaluating the possibility of impersonation (the possibility that a photographer having provided user feature information impersonates a registrant). In this case, the apparatus condition may be a condition using the value of an evaluation index for evaluating the possibility of impersonation. In this case, user feature information of a type that satisfies the apparatus condition can be determined as user feature information with which the possibility of impersonation is high. The apparatus condition may be defined so that user feature information of a type that does not satisfy the apparatus condition is excluded from options as user feature information with which the possibility of impersonation is high.

For example, the apparatus condition may be at least one of whether a predetermined time elapses after user feature information is acquired, whether a predetermined number of pieces of new data are acquired, whether the holding section 103 is detached, and whether the power supply is turned on or off. In these cases, if the predetermined time elapses after user feature information is acquired, or if the predetermined number of pieces of new data are acquired, or if the holding section 103 is detached, or if the power supply is turned on or off, the apparatus condition is satisfied. User feature information that satisfies the apparatus condition is excluded from the options as user feature information with which the possibility of impersonation is high (as user feature information that satisfies the apparatus condition). The information processing apparatus is an apparatus used to acquire user feature information, and may be the imaging apparatus 2300, or may be an apparatus other than the imaging apparatus 2300 (e.g., an apparatus connected to the imaging apparatus 2300 so that the apparatus can communicate with the imaging apparatus 2300). The apparatus condition is not limited to the above conditions. For example, in a case where the information processing apparatus is the imaging apparatus 2300, the apparatus condition may be at least one of whether the setting of a lens is changed and whether the imaging capturing mode is switched.

Specific examples of the technique for determining user feature information to be left as an option based on whether the apparatus condition is satisfied include the following technique. When an eye image and a password are acquired as user feature information, and if the power supply is turned on or off, the feature condition determination section 2301 determines that the password satisfies the apparatus condition. In this case, the feature condition determination section 2301 deletes the password from the options for user feature information in the feature selection section 2001. This is because it can be determined that the possibility of impersonation by another person is higher with a password than with an eye image.

User feature information to be left as an option (available user feature information) may be determined based on both whether the feature condition is satisfied and whether the apparatus condition is satisfied. Specific examples of the technique for determining user feature information to be left as an option based on both whether the feature condition is satisfied and whether the apparatus condition is satisfied include the following technique. Based on the verification matching likelihood calculated with respect to each of the types of already acquired pieces of user feature information, the feature condition determination section 2301 determines, with respect to each type, whether to leave the already acquired piece of user feature information as an option. Based on the state of the information processing apparatus, the apparatus state determination section 2302 determines, with respect to each type, whether to leave the already acquired piece of user feature information as an option.

The feature condition determination section 2301 or the apparatus state determination section 2302 combines the results of these determinations, thereby making a final determination of whether to leave the already acquired piece of user feature information as an option. Specifically, the apparatus state determination section 2302 leaves user feature information in which the elapsed time from when the user feature information is acquired by the second information acquisition section 104 is less than or equal to a predetermined time, as an option (available user feature information) without depending on the value of the verification matching likelihood calculated using the user feature information. The feature condition determination section 2301 leaves, among pieces of user feature information in each of which the elapsed time from when the piece of user feature information is acquired by the second information acquisition section 104 is not less than or equal to the predetermined time, user feature information of which the verification matching likelihood is greater than or equal to the predetermined value, as an option. The feature condition determination section 2301 excludes, among the pieces of user feature information in each of which the elapsed time from when the piece of user feature information is acquired by the second information acquisition section 104 is not less than or equal to the predetermined time, user feature information of which the verification matching likelihood is not greater than or equal to the predetermined value, from the options.

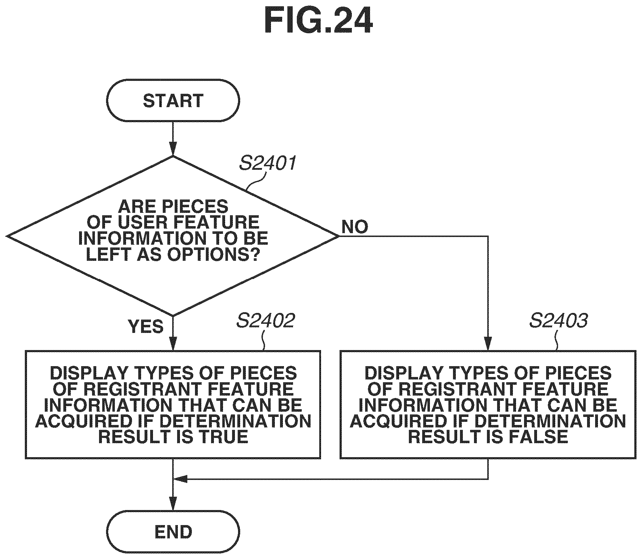

Fig. 24 is a flowchart illustrating an example of the operation of the feature condition determination section 2301 and the apparatus state determination section 2302 included in the imaging apparatus 2300 according to the present embodiment. For example, the processing of the flowchart in Fig. 24 is repeatedly executed in a predetermined cycle. For example, the processing of the flowchart in Fig. 24 may start if a predetermined operation (e.g., an operation for imaging or an operation for acquiring registrant feature information) on the imaging apparatus 2300 is performed. For example, the processing of the flowchart in Fig. 24 may start in conjunction with a particular situation. For example, the latest result of the processing of the flowchart in Fig. 24 is used in the processing of the flowchart in Fig. 22 (steps S2201 and S2202).

In step S2401, the feature condition determination section 2301 or the apparatus state determination section 2302 determines, with respect to each of the types of pieces of user feature information, whether to leave the piece of user feature information as an option (available user feature information). For example, this determination is made by determining whether the feature condition is satisfied, or determining whether the apparatus condition is satisfied, or determining whether the determination condition using both the feature condition and the apparatus condition is satisfied. As a result of this determination, if the pieces of user feature information of all the types are to be left as options (YES in step S2401), the operation in step S2402 is performed. If, on the other hand, a piece of user feature information of at least a single type is not to be left as an option (NO in step S2401), the operation in step S2403 is performed.

In step S2402, the display section 107 displays, on the display panel included in the operation member 113, information indicating the types of pieces of registrant feature information that can be acquired if the determination result in step S2401 is true. For example, the information displayed in step S2402 may be the information illustrated in Fig. 21A or 21B. In step S2403, the display section 107 displays, on the display panel included in the operation member 113, information indicating the types of pieces of registrant feature information that can be acquired if the determination result in step S2401 is false. The information displayed at this time may be the names of the features (the pieces of registrant feature information), or may be information indicating actions required to acquire the features (the pieces of registrant feature information). In the information illustrated in Figs. 21A and 21B, a user (a registrant) may be prevented from specifying the types of features (pieces of registrant feature information) excluded from the options.

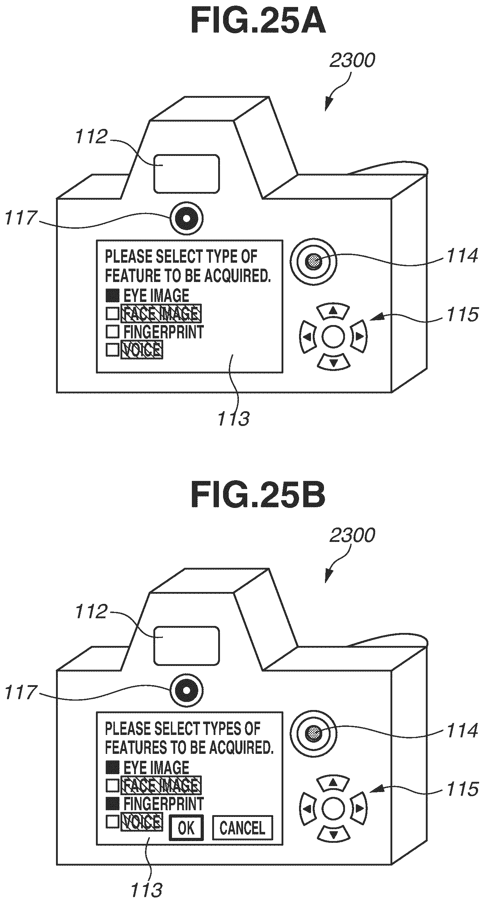

Figs. 25A and 25B are diagrams illustrating examples of the information to which the user (the registrant) refers to specify the types of features in a case where the types of features excluded from the options are present. Figs. 25A and 25B illustrate a case where a face image and voice are excluded from the options. In Figs. 25A and 25B, items of the types of features (the types of pieces of registrant feature information) that are displayed are the same as the items illustrated in Figs. 21A and 21B. However, if a type excluded from the options (the available types) as the type of user feature information by the feature condition determination section 2301 or the apparatus state determination section 2302 is present, the display section 107 shades the name of a feature (registrant feature information) of this type. In this manner, the display section 107 prevents the user (the registrant) from specifying the feature (the registrant feature information) of this type. For example, the display section 107 may not receive specifying in a selection field for the feature (a checkbox in Figs. 25A and 25B), or may invalidate the selection of the selection field for the feature. The method for displaying a feature (registrant feature information) so that the specifying of the feature (the registrant feature information) is prevented is not limited. The name of the feature may be grayed out, or strike-through may be displayed on the name of the feature, or the name of the feature may not be displayed.

For example, if user feature information is acquired when imaging is performed, and if registrant feature information is acquired and authenticated after the imaging is performed, there is a case where the possibility of impersonation by another person is high compared to a general authentication method. In the present embodiment, based on predetermined conditions regarding user feature information and the state of an information processing apparatus (a feature condition and an apparatus condition), the feature selection section 2001 determines a selection target for the type of registrant feature information. Thus, it is possible to further increase security against impersonation. A selection target for the type of registrant feature information is determined based on the result of determining whether the user feature information satisfies the feature condition, whereby it is possible to prevent the execution of verification using user feature information that can cause a decrease in authentication accuracy. Thus, it is possible to improve authentication accuracy. A selection target for the type of registrant feature information is determined based on the result of determining whether the user feature information satisfies the apparatus condition, whereby it is possible to appropriately use the type of registrant feature information to be acquired. Thus, it is possible to improve the convenience and the security of the imaging apparatus 2300. The security includes security in the sense that registrant feature information and user feature information cannot be authenticated by another person abusing the registrant feature information and the user feature information.

### [Variations]

In the present embodiment, a case has been illustrated where a selection target (an option) for the type of user feature information is switched, and registrant feature information of the type as the selection target is acquired. The present disclosure, however, is not necessarily limited to this.

For example, based on the determination result of the feature condition determination section 2301 or the apparatus state determination section 2302, the imaging apparatus 2300 may perform a feature deletion process for controlling whether to delete user feature information stored in the holding section 103. For example, the imaging apparatus 2300 may delete, among pieces of user feature information stored in the holding section 103, a piece of user feature information of a type that satisfies the apparatus condition according to the determination of the apparatus state determination section 2302. As described above, by using the determination result of the feature condition determination section 2301 or the apparatus state determination section 2302, it is possible to prevent user feature information of a type of which the reliability decreases due to the satisfaction of a predetermined condition from being used for verification against registrant feature information. Consequently, it is possible to reduce the probability of incorrect authentication.

For example, based on the determination result of the feature condition determination section 2301 or the apparatus state determination section 2302, the imaging apparatus 2300 can also control whether the verification section 106 is to perform verification. For example, as a result of the determination of the feature condition determination section 2301, if the verification matching likelihood calculated using already acquired pieces of user feature information of all types is less than the predetermined value, the verification section 106 can be controlled not to perform verification. In a case where only user feature information unsuitable for verification is obtained, the verification itself is not performed, whereby it is possible to reduce the probability of incorrect authentication.

### (Other Embodiments)

The present disclosure can employ an embodiment as, for example, a system, an apparatus, a method, a program, or a storage medium. Specifically, the present disclosure may be applied to a system including a plurality of devices, or may be applied to an apparatus composed of a single device. The present disclosure can also be achieved by the process of supplying a program for achieving one or more functions of the above embodiments to a system or an apparatus via a network or a storage medium, and of causing one or more processors included in a computer of the system or the apparatus to read and execute the program. The present disclosure can also be achieved by a circuit (e.g., an ASIC or an FPGA) for achieving the one or more functions.

All the above embodiments merely illustrate specific examples for carrying out the present disclosure, and the technical scope of the present disclosure should not be interpreted in a limited manner based on these embodiments. That is, the present disclosure can be carried out in various ways without departing from the technical idea or the main feature of the present disclosure.

For example, the disclosure of the present embodiments includes the following configurations, method, and program.

### (Configuration 1)

An information processing system that associates a captured image captured by an imaging unit and photographer information regarding a photographer of the captured image, the information processing system including:
a first acquisition unit configured to acquire a first feature of a person;
a second acquisition unit configured to acquire a second feature of a person;
an identification unit configured to identify a photographer through a verification process for verifying the first feature acquired by the first acquisition unit and the second feature acquired by the second acquisition unit against each other;
a recording control unit configured to record, in a case where imaging is performed in a state where no first feature corresponding to the second feature acquired by the second acquisition unit is detected in the verification process, a captured image obtained by the imaging and the second feature in association with each other in a memory; and
a determining unit configured to determine, based on the second feature recorded by the recording control unit and the first feature acquired by the first acquisition unit after the imaging, the photographer information that is to be associated with the captured image.

### (Configuration 2)

The information processing system according to configuration 1,
wherein, in a case where the first feature has been acquired by the first acquisition unit, the identification unit performs the verification process, and in a case where the first feature has not been acquired by the first acquisition unit, the identification unit does not perform the verification process, and
wherein, in a case where the verification process has not been performed, the recording control unit records a captured image obtained by the imaging and the second feature in association with each other in the memory.

### (Configuration 3)

The information processing system according to configuration 1 or 2, wherein the determining unit reads, among a plurality of the second features recorded by the recording control unit, a second feature that has not been subjected to the verification process against the first feature from the memory, and the determining unit determines, based on the read second feature and a first feature that is acquired by the first acquisition unit after the imaging, the photographer information that is to be associated with the captured image.

### (Configuration 4)

The information processing system according to any one of configurations 1 to 3, wherein the first and second features include a feature based on biological information.

### (Configuration 5)

The information processing system according to any one of configurations 1 to 4, wherein the first acquisition unit performs an authentication process based on a third feature of a person, and in a case where the authentication process is successful, the first acquisition unit acquires the first feature of the person.

### (Configuration 6)

The information processing system according to any one of configurations 1 to 5, further including an association unit configured to associate the photographer information determined by the determining unit with the captured image.

### (Configuration 7)

The information processing system according to configuration 6, further including a reception unit configured to receive an instruction as to whether to associate the photographer information with the captured image,
wherein in a case where the reception unit receives an instruction to associate the photographer information with the captured image, the association unit associates the photographer information determined by the determining unit with the captured image.

### (Configuration 8)

The information processing system according to any one of configurations 1 to 7, further including a notification unit configured to notify that the information processing system is in a state where the first feature corresponding to the second feature is not detected in the verification process.

### (Configuration 9)

The information processing system according to any one of configurations 1 to 8, wherein the recording control unit records the captured image in a storage medium attachable to and detachable from an apparatus including the determining unit in a state where the captured image is associated with the second feature.

### (Configuration 10)

The information processing system according to configuration 9, further including:
a reception unit configured to receive, in a case where an instruction to remove the storage medium in which the captured image that has not been associated with the photographer information has been recorded, from the apparatus including the determining unit is issued, an instruction as to whether to remove the storage medium; and
a removal unit configured to perform, in a case where the reception unit receives an instruction to remove the storage medium, a process for removing the storage medium.

### (Configuration 11)

The information processing system according to any one of configurations 1 to 10, wherein the recording control unit performs a process including encryption on data indicating the second feature of the person and records a captured image obtained by the imaging and the second feature in association with each other in the memory.

### (Configuration 12)

The information processing system according to any one of configurations 1 to 11, further including an association unit configured to associate the photographer information determined by the determining unit with the captured image,
wherein an apparatus including the first and second acquisition units and an apparatus including the association unit are connected in a mutually communicable manner.

### (Configuration 13)

The information processing system according to configuration 12, wherein the apparatus including the first and second acquisition units and an apparatus including the determining unit and the association unit are connected in a mutually communicable manner.

### (Configuration 14)

The information processing system according to any one of configurations 1 to 13,
wherein the second acquisition unit is configured to acquire a plurality of types of the second features, and
wherein the information processing system further comprises a feature selection unit configured to select, based on a type of the second feature recorded by the recording control unit, a type of the first feature to be acquired by the first acquisition unit.

### (Configuration 15)

The information processing system according to configuration 14, wherein the feature selection unit selects, from among the plurality of types of the second features acquired by the second acquisition unit, a plurality of types as the type of the first feature to be acquired by the first acquisition unit.

### (Configuration 16)

The information processing system according to configuration 14 or 15, wherein, based on the first and second features of a type selected by the feature selection unit, the determining unit determines the photographer information that is to be associated with the captured image.

### (Configuration 17)

The information processing system according to any one of configurations 14 to 16, further including a condition determination unit configured to determine whether the second feature recorded by the recording control unit satisfies a predetermined condition,
wherein, based on a result of the determination made by the condition determination unit, the feature selection unit selects the type of the first feature to be acquired by the first acquisition unit.

### (Configuration 18)

The information processing system according to configuration 17, wherein the predetermined condition includes a condition defined using at least one of the second feature recorded by the recording control unit and a state of an apparatus used to acquire the second feature.

### (Configuration 19)

The information processing system according to configuration 17 or 18, wherein the predetermined condition includes a condition defined using at least one of an evaluation index for evaluating an accuracy of the verification process in a case where the second feature recorded by the recording control unit is used, and an evaluation index for evaluating a possibility that a person having provided the second feature impersonates a person having the first feature.

### (Configuration 20)

The information processing system according to any one of configurations 17 to 19, further including a feature deletion unit configured to, based on the result of the determination by the condition determination unit, delete from the memory the second feature of a type excluded from selection targets of the feature selection unit among the second features acquired by the second acquisition unit.

### (Method 1)

An information processing method for associating a captured image captured by an imaging unit and photographer information regarding a photographer of the captured image, the information processing method including:
acquiring a first feature of a person;
acquiring a second feature of a person;
identifying a photographer through a verification process for verifying the acquired first feature and the acquired second feature against each other;
recording, in a case where imaging is performed in a state where no first feature corresponding to the acquired second feature is detected in the verification process, a captured image obtained through the imaging and the second feature in association with each other in a memory; and
determining, based on the recorded second feature and the first feature acquired after the imaging, the photographer information that is to be associated with the captured image.

### (Program 1)

A program for causing a computer to function as the units of the information processing system according to any one of configurations 1 to 20.

According to the present disclosure, even if information suitable for identifying a user of an imaging apparatus is unavailable when imaging is performed, it is possible to identify the user of the imaging apparatus.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments, but is defined by the scope of the following claims.

## Claims

1. An information processing system (1, 2, 3) that associates a captured image captured by an imaging means (1, 1900, 2300) and photographer information regarding a photographer of the captured image, the information processing system (1, 2, 3) comprising:
a first acquisition means (101) configured to acquire a first feature of a person;
a second acquisition means (104) configured to acquire a second feature of a person;
an identification means (106, 203) configured to identify a photographer through a verification process for verifying the first feature and the second feature against each other;
a recording control means (103) configured to record, in a case where imaging is performed in a state where no first feature corresponding to the second feature is detected in the verification process, a captured image obtained through the imaging and the second feature in association with each other in a memory; and
a determining means (106, 203) configured to determine, based on the second feature recorded by the recording control means (103) and the first feature acquired by the first acquisition means (101) after the imaging, the photographer information that is to be associated with the captured image.

2. The information processing system (1, 2, 3) according to claim 1,
wherein, in a case where the first feature has been acquired by the first acquisition means (101), the identification means (106, 203) is configured to perform the verification process, and in a case where the first feature has not been acquired by the first acquisition means (101), the identification means (106, 203) is configured not to perform the verification process, and
wherein, in a case where the verification process has not been performed, the recording control means (103) is configured to record a captured image obtained by the imaging and the second feature in association with each other in the memory.

3. The information processing system (1, 2, 3) according to claim 1 or claim 2, wherein the determining means (106, 203) is configured to read, among a plurality of second features recorded by the recording control means (103), a second feature that has not been subjected to the verification process against the first feature from the memory, and the determining means (106, 203) is configured to determine, based on the read second feature and a first feature that is acquired by the first acquisition means (101) after the imaging, the photographer information that is to be associated with the captured image.

4. The information processing system (1, 2, 3) according to any one of claims 1 to 3, wherein the first and second features include a feature based on biological information.

5. The information processing system (1, 2, 3) according to any one of claims 1 to 4, wherein the first acquisition means (101) is configured to perform an authentication process based on a third feature of a person, and in a case where the authentication process is successful, the first acquisition means (101) is configured to acquire the first feature of the person.

6. The information processing system (1, 2, 3) according to any one of claims 1 to 5, further comprising an association means configured to associate the photographer information determined by the determining means (106, 203) with the captured image.

7. The information processing system (1, 2, 3) according to claim 6, further comprising a reception means (113-115) configured to receive an instruction as to whether to associate the photographer information with the captured image,
wherein, in a case where the reception means (113-115) receives an instruction to associate the photographer information with the captured image, the association means is configured to associate the photographer information determined by the determining means (106, 203) with the captured image.

8. The information processing system (1, 2, 3) according to any one of claims 1 to 7, further comprising a notification means (105) configured to notify that the first feature corresponding to the second feature is not detected in the verification process.

9. The information processing system (1, 2, 3) according to any one of claims 1 to 8, wherein the recording control means (103) is configured to record the captured image in a storage medium attachable to and detachable from an apparatus including the determining means (106, 203) in a state where the captured image is associated with the second feature.

10. The information processing system (1, 2, 3) according to claim 9, further comprising:
a reception means (113-115) configured to receive, in a case where an instruction to remove the storage medium in which the captured image that has not been associated with the photographer information has been recorded, from the apparatus including the determining means (106, 203) is issued, an instruction as to whether to remove the storage medium; and
a removal means configured to perform, in a case where the reception means (113-115) receives an instruction to remove the storage medium, a process for removing the storage medium.

11. The information processing system (1, 2, 3) according to any one of claims 1 to 10, wherein the recording control means (103) is configured to perform a process including encryption on data indicating the second feature of the person and record a captured image obtained by the imaging and the second feature in association with each other in the memory.

12. The information processing system (1, 2, 3) according to any one of claims 1 to 11, further comprising an association means configured to associate the photographer information determined by the determining means (106, 203) with the captured image,
wherein an apparatus including the first acquisition means (101) and the second acquisition means (104) and an apparatus including the association means are connected in a mutually communicable manner.

13. The information processing system (1, 2, 3) according to claim 12, wherein the apparatus including the first acquisition means (101) and the second acquisition means (104) and an apparatus including the determining means (106, 203) and the association means are connected in a mutually communicable manner.

14. The information processing system (1, 2, 3) according to any one of claims 1 to 13,
wherein the second acquisition means (104) is configured to acquire a plurality of types of second features, and
wherein the information processing system further comprises a feature selection means configured to select, based on a type of the second feature recorded by the recording control means (103), a type of the first feature to be acquired by the first acquisition means (101).

15. The information processing system (1, 2, 3) according to claim 14, wherein the feature selection means is configured to select, from among the plurality of types of the second features acquired by the second acquisition means (104), a plurality of types as the type of the first feature to be acquired by the first acquisition means (101).

16. The information processing system (1, 2, 3) according to claim 14, wherein, the first feature is of the type selected by the feature selection means and based on the second feature, the determining means (106, 203) is configured to determine the photographer information that is to be associated with the captured image.

17. The information processing system (1, 2, 3) according to claim 14, further comprising a condition determination means configured to determine whether the second feature recorded by the recording control means (103) satisfies a predetermined condition,
wherein, based on a result of the determination made by the condition determination means, the feature selection means is configured to select the type of the first feature to be acquired by the first acquisition means (101).

18. The information processing system (1, 2, 3) according to claim 17, wherein the predetermined condition includes a condition defined using at least one of the second features recorded by the recording control means (103) and a state of an apparatus used to acquire the said at least one of the second features.

19. The information processing system (1, 2, 3) according to claim 17, wherein the predetermined condition includes a condition defined using at least one of an evaluation index for evaluating an accuracy of the verification process in a case where the second feature recorded by the recording control means (103) is used, and an evaluation index for evaluating a possibility that a person having provided the second feature impersonates a person having the first feature.

20. The information processing system (1, 2, 3) according to claim 17, further comprising a feature deletion means configured to, based on the result of the determination by the condition determination means, delete from the memory a second feature of a type excluded from selection targets of the feature selection means among the second features acquired by the second acquisition means (104).

21. An information processing method for associating a captured image captured by an imaging means (1, 1900, 2300) and photographer information regarding a photographer of the captured image, the information processing method comprising
acquiring a first feature of a person;
acquiring a second feature of a person;
identifying a photographer through a verification process (S407) for verifying the acquired first feature and the acquired second feature against each other;
recording, in a case where imaging is performed in a state where no first feature corresponding to the acquired second feature is detected in the verification process, a captured image obtained through the imaging and the second feature in association with each other in a memory; and
determining, based on the recorded second feature and the first feature acquired after the imaging, the photographer information that is to be associated (S409) with the captured image.

22. A program comprising instructions which, when the program is executed by a computer, cause the computer to carry out the method according to claim 21.
